# EUROPEAN PATENT SPECIFICATION

(11) **EP 3 633 514 B1**
(45) Date of publication and mention of the grant of the patent: **16.02.2022**
(21) Application number: 18805427.4
(22) Date of filing: 26.03.2018
(51) Int. Cl.: G06F 12/00, G06F 16/25

(54) **DATA EXCHANGE SYSTEM, DATA EXCHANGE METHOD, AND DATA EXCHANGE PROGRAM**
DATENAUSTAUSCHSYSTEM, DATENAUSTAUSCHVERFAHREN UND DATENAUSTAUSCHPROGRAMM
SYSTÈME D'ÉCHANGE DE DONNÉES, PROCÉDÉ D'ÉCHANGE DE DONNÉES ET PROGRAMME D'ÉCHANGE DE DONNÉES

(30) Priority: 24.05.2017 JP 2017102361
(43) Date of publication of application: 08.04.2020
(73) Proprietor: Toshin System, Ltd., Shinjuku-ku, Tokyo 160-0004 (JP)
(72) Inventor: NISHIMURA Makoto, Tokyo 160004 (JP)
(74) Representative: Hoffmann Eitle
(86) International application number: PCT/JP2018/012178
(87) International publication number: WO 2018/216346

(56) References cited:
- WO-A1-96/37817
- WO-A1-2017/208922
- JP-A- H06 251 073
- JP-A- 2004 185 520
- JP-A- 2005 011 049
- US-A1- 2006 095 288
- US-A1- 2013 110 852

## Description

### Technical Field

The present invention relates to a data exchange system, a data exchange method, and a data exchange program. In particular, the present invention relates to a data exchange system, a data exchange method, and a data exchange program that can flexibly realize data exchange between databases having a unique code system including composite attributes.

### Background Art

When various data are managed to create a database, generally, data is organized and classified, and an identifier (ID) for identifying each data is associated with each data. One database is configured by a set of data having a predetermined attribute, and an ID for identifying each data corresponds to a "code", that is, a "key" of the database. For example, when natural products such as fruits and marine products are managed, it is necessary to combine, identify and manage various attribute elements such as production areas, cultivation areas, cultivation methods, seasons, sizes, and ranks, in addition to varieties and items. This is a method of identifying data by defining a production area code, a size code, a rank code, and the like and combining these codes. For example, when data exchange such as ordering, delivery, and billing is performed between databases handling these data, the data exchange is performed by exchanging IDs for identifying various attribute elements in the individual databases.

However, combinations of attribute elements may be different between data used in one database and data used in other databases. That is, in one database, the item attribute and the standard attribute are combined to configure one data and a predetermined ID may be associated with this data. However, in other databases, the item attribute and another attribute different from the standard attribute may be combined to configure one data and a predetermined ID may be associated with the data. For example, in one fishing company, for data "horse mackerel", the item attribute "horse mackerel" and the standard attribute "size" may be combined, the "horse mackerel" may be classified into "large horse mackerel", "medium horse mackerel", and "small horse mackerel", and an ID may be associated with each data. However, in other fishing companies, the data may be configured using the standard attribute "landing place" instead of the standard attribute "size" (for example, "Hokkaido horse mackerel", "Aomori horse mackerel", or the like).

Such cases are not rare and are a major obstacle to data exchange. For each attribute such as a product type, an item, a production area, and a size, standard codes are developed. However, it is difficult to use the standard codes in the system having IDs that collectively manage the "composite attributes" as described above. Not only is it not possible to use the "standard code" in a region of one database, but it is also difficult to establish a conversion relation with the standard code (the case where the complex attributes are associated with a single ID, this is hereinafter referred to as the "composite attributes").

Conventionally, an electronic commerce mediation method for mediating business transactions between a plurality of suppliers and buyers of products or services via a digital data communication network is known (refer to Patent Literature 1). The electronic commerce mediation method includes: (a) previously storing, as a mediator database, a standard code system to show a correspondence between a supplier-side classification code system and a buyer-side classification code system showing the products or the services of the suppliers, browsing data in which attribute information regarding the same products or services supplied by the plurality of suppliers is standardized and the attribute information can be browsed in comparison with each other, and non-browsing data including transaction conditions set for each combination of the suppliers and the buyers; (b) causing the mediator to convert transaction content of the product or the service of the supplier presented to the buyer into the classification code system of the buyer and present it to the buyer; (c) causing the buyer to select the product or the service which the buyer wishes to purchase and make a transaction application for the selected product or service to the mediator; (d) causing the mediator to read, from the non-browsing data, different transaction conditions for each buyer of the product or the service selected by the buyer, make an estimate, and present it to the buyer; (e) causing the buyer to determine the supplier on the basis of the estimate presented in step (d); and (f) causing the buyer to convert it into the classification code system of each of the buyer and the supplier, on the basis of the transaction conditions determined in step (e), and perform an ordering procedure on behalf of the purchaser and the supplier. According to the electronic commerce mediation method described in Patent Literature 1, it is possible to eliminate a failure due to a difference in the classification code systems between the buyers and the suppliers, and to perform transactions under special transaction conditions for each transaction party.

### Citation List

### Patent Literature

WO 96/37817 A1 relates to relates to a data conversion system and method which converts data between different software and hardware platforms. A DCLE converts data from different types or formats from various platforms to a single common data standard having a pre-defined generic data type, and the data is then converted from this generic type to a new desired format or type and stored on an existing or new destination platform.

Patent Literature 1: JP 2002-230342 A

### Summary of Invention

The object of the invention is solved by the features of the independent claims. Further embodiments are the subject-matter of the dependent claims.

### Technical Problem

The electronic commerce mediation method described in Patent Literature 1 uses a standard code system with a one-to-one correspondence between the service supplier-side code system and the buyer-side code system to absorb the difference between the code systems. That is, the electronic commerce mediation method described in Patent Literature 1 realizes data exchange between different databases by individually constructing conversion tables of unique codes with a one-to-one correspondence. However, in this method, since the number of code systems with the one-to-one correspondence increases as the number of databases increases, it is difficult to perform free data exchange between arbitrary databases for data including the composite attributes.

Accordingly, an object of the present invention is to provide a data exchange system, a data exchange method, and a data exchange program capable of realizing flexible information exchange by reliably and stably realizing data exchange between databases having code systems including composite attributes.

### Solution to Problem

In order to achieve the above object, the present invention provides a data exchange system including: a base database that stores attribute data included in an attribute item indicating an attribute in association with a base code of the attribute data; an item mapping unit that, input-side external data stored in an input-side external database including input-side external attribute data corresponding to an input-side external attribute item indicating an attribute of the input-side external data, associates the attribute item corresponding to the input-side external attribute item with the input-side external attribute item, and, output-side external data stored in an output-side external database including output-side external attribute data corresponding to an output-side external attribute item indicating an attribute of the output-side external data, associates the attribute item corresponding to the output-side external attribute item with the output-side external attribute item; a code mapping unit that associates the input-side external attribute data with the base code included in the attribute item associated with the input-side external attribute item to which the input-side external attribute data belongs by the item mapping unit, and associates the output-side external attribute data with the base code included in the attribute item associated with the output-side external attribute item to which the output-side external attribute data belongs by the item mapping unit; a standard data conversion unit that converts the input-side external data into standard data configured by the attribute data associated with the base code associated with the input-side external attribute data; and a conversion unit that refers to the base code associated with the output-side external attribute data, and converts the input-side external data into output data for the output-side external database, using the attribute data corresponding to the base code and included in the standard data.

In the data exchange system, when the input-side external attribute item includes a plurality of the attribute items, the item mapping unit can associate the input-side external attribute item with each of the plurality of attribute items, and when the output-side external attribute item includes a plurality of the attribute items, the item mapping unit can associate the output-side external attribute item with each of the plurality of attribute items.

In the data exchange system, when the input-side external attribute data includes a plurality of pieces of the attribute data, the code mapping unit can associate the input-side external attribute data with the base code of each of the plurality of pieces of attribute data, and when the output-side external attribute data includes a plurality of pieces of the attribute data, the code mapping unit can associate the output-side external attribute data with the base code of each of the plurality of pieces of attribute data.

The data exchange system can further include a loss information management unit that refers to the base code associated with the output-side external attribute data in the conversion unit, and executes predetermined processing when the base code corresponding to the attribute data included in the standard data is not associated with the output-side external attribute data.

The data exchange system can further include an information supplement unit that adds supplementary information to the standard data, the input-side external data including the supplementary information related to the input-side external data. The conversion unit can add the supplementary information added to the standard data to the output data.

Further, in order to achieve the above object, the present invention provides a data exchange system including: a base database that stores attribute data included in an attribute item indicating an attribute in association with a base code of the attribute data; an item mapping unit that, input-side external data stored in an input-side external database including input-side external attribute data corresponding to an input-side external attribute item indicating an attribute of the input-side external data, associates the attribute item corresponding to the input-side external attribute item with the input-side external attribute item, and, output-side external data stored in an output-side external database including output-side external attribute data corresponding to an output-side external attribute item indicating an attribute of the output-side external data, associates the attribute item corresponding to the output-side external attribute item with the output-side external attribute item; a code mapping unit that associates the input-side external attribute data with the base code included in the attribute item associated with the input-side external attribute item to which the input-side external attribute data belongs by the item mapping unit, and associates the output-side external attribute data with the base code included in the attribute item associated with the output-side external attribute item to which the output-side external attribute data belongs by the item mapping unit; and a standard data conversion unit that converts the input-side external data into standard data configured by the attribute data associated with the base code associated with the input-side external attribute data.

Further, in order to achieve the above object, the present invention provides a data exchange system including: a base database that stores attribute data included in an attribute item indicating an attribute in association with a base code of the attribute data; an item mapping unit that, input-side external data stored in an input-side external database including input-side external attribute data corresponding to an input-side external attribute item indicating an attribute of the input-side external data, associates the attribute item corresponding to the input-side external attribute item with the input-side external attribute item, and, output-side external data stored in an output-side external database including output-side external attribute data corresponding to an output-side external attribute item indicating an attribute of the output-side external data, associates the attribute item corresponding to the output-side external attribute item with the output-side external attribute item; a code mapping unit that associates the input-side external attribute data with the base code included in the attribute item associated with the input-side external attribute item to which the input-side external attribute data belongs by the item mapping unit, and associates the output-side external attribute data with the base code included in the attribute item associated with the output-side external attribute item to which the output-side external attribute data belongs by the item mapping unit; and a conversion unit that refers to the base code associated with the output-side external attribute data, and converts the input-side external data into output data for the output-side external database, using the attribute data corresponding to the base code and included in standard data configured by the attribute data associated with the base code associated with the input-side external attribute data.

Further, in order to achieve the above object, the present invention provides a data exchange method for exchanging data in an input-side external database into data usable in an output-side external database. The data exchange method includes: an item mapping step of, input-side external data stored in the input-side external database including input-side external attribute data corresponding to an input-side external attribute item indicating an attribute of the input-side external data, associating an attribute item indicating an attribute corresponding to the input-side external attribute item with the input-side external attribute item, and, output-side external data stored in the output-side external database including output-side external attribute data corresponding to an output-side external attribute item indicating an attribute of the output-side external data, associating the attribute item corresponding to the output-side external attribute item with the output-side external attribute item; a code mapping step of associating the input-side external attribute data with a base code of attribute data included in the attribute item associated with the input-side external attribute item to which the input-side external attribute data belongs by the item mapping unit, and associating the output-side external attribute data with the base code of the attribute data included in the attribute item associated with the output-side external attribute item to which the output-side external attribute data belongs by the item mapping unit; a standard data conversion step of converting the input-side external data into standard data configured by the attribute data associated with the base code associated with the input-side external attribute data; and a conversion step of referring to the base code associated with the output-side external attribute data, and converting the input-side external data into output data for the output-side external database, using the attribute data corresponding to the base code and included in the standard data.

Further, in order to achieve the above object, the present invention provides a data exchange program for a data exchange system that exchanges data in an input-side external database into data usable in an output-side external database. The data exchange program causes a computer to realize: an item mapping function of, input-side external data stored in the input-side external database including input-side external attribute data corresponding to an input-side external attribute item indicating an attribute of the input-side external data, associating an attribute item indicating an attribute corresponding to the input-side external attribute item with the input-side external attribute item, and, output-side external data stored in the output-side external database including output-side external attribute data corresponding to an output-side external attribute item indicating an attribute of the output-side external data, associating the attribute item corresponding to the output-side external attribute item with the output-side external attribute item; a code mapping function of associating the input-side external attribute data with a base code of attribute data included in the attribute item associated with the input-side external attribute item to which the input-side external attribute data belongs by the item mapping unit, and associating the output-side external attribute data with the base code of the attribute data included in the attribute item associated with the output-side external attribute item to which the output-side external attribute data belongs by the item mapping unit; a standard data conversion function of converting the input-side external data into standard data configured by the attribute data associated with the base code associated with the input-side external attribute data; and a conversion function of referring to the base code associated with the output-side external attribute data, and converting the input-side external data into output data for the output-side external database, using the attribute data corresponding to the base code and included in the standard data.

### Advantageous Effects of Invention

According to the data exchange system, the data exchange method, and the data exchange program according to the present invention, it is possible to provide a data exchange system, a data exchange method, and a data exchange program capable of realizing flexible information exchange by reliably and stably realizing data exchange between databases having code systems including composite attributes.

### Brief Description of Drawings

Fig. 1 is a schematic diagram of a data exchange system according to the present embodiment.
Fig. 2 is a functional configuration block diagram of a data exchange system according to the present embodiment.
Fig. 3 is a diagram showing a data configuration of a base database according to the present embodiment.
Fig. 4 is a diagram showing a data configuration of an input-side external database according to the present embodiment.
Fig. 5 is a diagram showing a data configuration of an output-side external database according to the present embodiment.
Fig. 6 is a diagram showing item mapping processing in an item mapping unit according to the present embodiment.
Fig. 7 is a diagram showing code mapping processing in a code mapping unit according to the present embodiment.
Fig. 8 is a diagram showing generation of output data according to the present embodiment.
Fig. 9 is a schematic diagram of an operation of a loss information management unit according to the present embodiment.
Fig. 10 is a schematic diagram of an operation of a loss information management unit according to the present embodiment.
Fig. 11 is a hardware configuration diagram of a data exchange system according to the present embodiment.

### Description of Embodiments

### [Embodiment]

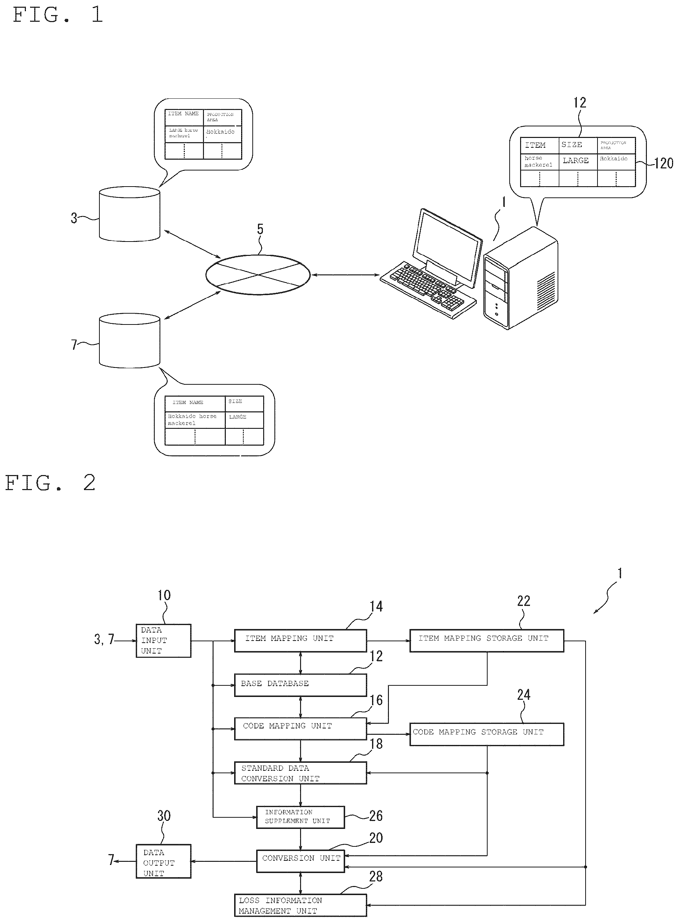

Fig. 1 shows an overview of a data exchange system according to an embodiment of the present invention.

### [Overview of data exchange system 1]

A data exchange system 1 according to the present embodiment is a system in which, in the case where data is supplied from one database to another database, even when a code system adopted in one database is different from a code system adopted in another database, data stored in one database is exchanged with data capable of being processed in another database and the data is output. That is, the data exchange system 1 separates composite attributes of the data (input data) used in one database into individual attributes defined in advance in the data exchange system 1, and decomposes the input data corresponding to the separated individual attributes. Further, the data exchange system 1 generates output data by integrating the decomposed input data in accordance with the code system adopted in another database of the output destination, and supplies the generated output data to another database of the output destination.

Here, terms used in the present embodiment are defined. First, "composite attributes" indicate that, in one database, two or more attributes among a plurality of attributes defined in the data exchange system 1 are combined and used as one attribute. For example, in the data exchange system 1, an "item" attribute, a "size" attribute, and a "production area" attribute are defined for one piece of data. When at least a part of one piece of data is defined by using a configuration including the "item" attribute and the "size" attribute in the data exchange system 1 as an "item name" attribute in one database, the "item name" attribute becomes the "composite attributes". The composite attributes used in one database may be different from the composite attributes used in another database. The attribute is the name and content of one piece of data and/or the nature or characteristics of the content.

Further, "data having the composite attributes" refers to data including data in which predetermined data in one database corresponds to each of a plurality of attributes in the data exchange system 1 (hereinafter, referred to as "attribute data". The "attribute data" is data representing the name and content of an object such as a predetermined product and/or the nature or characteristics of the scenic spot/content.). In the data exchange system 1, an attribute is referred to as an "attribute item", and an identifier for uniquely identifying the "attribute item" is referred to as an "attribute item identifier". The "attribute item" itself may function as the "attribute item identifier". In that case, the "attribute item" itself functions as the identifier. Further, in the data exchange system 1, an attribute item includes one or more "attribute data", and an identifier for uniquely identifying the "attribute data" is referred to as a "base code".

Specifically, when a code system adopted in one database is a code system that handles data having composite attributes, the data exchange system 1 associates items of the composite attributes used in one database with one or more predetermined attribute items defined in the data exchange system 1 (hereinafter, referred to as "item mapping"). Next, the data exchange system 1 associates the data included in the items of the complex attributes of one database with the attribute data corresponding to the base code in the data exchange system 1, on the basis of a result of the item mapping (hereinafter, referred to as "code mapping"). Thereby, the data exchange system 1 decomposes the data having the composite attributes of one database into attribute data of the predetermined attributes, performs association, and generates data of one record format (hereinafter, referred to as "standard data"). The data exchange system 1 can also store the standard data in advance.

On the other hand, the data exchange system 1 performs item mapping for items of composite attributes adopted in another database, similarly to the case of one database. Further, the data exchange system 1 performs code mapping for data included in in the items of the complex attributes of another database, similarly to one database. Then, the data exchange system 1 generates output data by rearranging the standard data into a configuration that can be processed in another database, on the basis of a result of the code mapping of another database. The data exchange system 1 supplies the generated output data to another database.

For example, as shown in Fig. 1, the case where data is supplied from an input-side external database 3 to an output-side external database 7 via a communication network 5 will be described. The data exchange system 1 can perform data exchange between a plurality of input-side external databases and a plurality of output-side external databases. In the present embodiment, data exchange between one input-side external database 3 and one output-side external database 7 will be described for simplification of description.

First, it is assumed that the input-side external database 3 has a code system in which data (hereinafter, referred to as "input-side external data") is defined by a combination of attribute items (hereinafter, referred to as "input-side external attribute items) of an "item name" attribute and a "production area" attribute. In this case, the input-side external attribute items are associated with one or more attribute data (hereinafter, referred to as "input-side external attribute data"). For example, the input-side external database 3 stores data "large horse mackerel-Hokkaido" as the input-side external data. In this case, the input-side external data (that is, the data "large horse mackerel-Hokkaido") is configured by a combination of the input-side external attribute data "large horse mackerel" included in the "item name" attribute item as the input-side external attribute item and the input-side external attribute data "Hokkaido" included in the "production area" attribute item as the input-side external attribute item.

Similarly, it is assumed that the output-side external database 7 has a code system in which data (hereinafter, referred to as "output-side external data") is defined by a combination of attribute items (hereinafter, referred to as "output-side external attribute items) of an "item name" attribute and a "size" attribute. In this case, the output-side external attribute items are associated with one or more attribute data (hereinafter, referred to as "output-side external attribute data"). For example, the output-side external database 7 stores data "Hokkaido horse mackerel-large" as the output-side external data. In this case, the output-side external data (that is, the data "Hokkaido horse mackerel-large") is configured by a combination of the output-side external attribute data "Hokkaido horse mackerel" included in the "item name" attribute item as the output-side external attribute item and the output-side external attribute data "large" included in the "size" attribute item as the output-side external attribute item. As described above, in the input-side external database 3 and the output-side external database 7, the code systems of the data stored by the input-side external database 3 and the output-side external database 7 may be different from each other, and even if the name of the input-side external attribute item and the name of the output-side external attribute item are the same, the attribute items in the data exchange system 1 constituting them may be different from each other.

The data exchange system 1 further includes a base database 12 that stores attribute data included in each attribute item in association with attribute items indicating attributes. For example, the base database 12 stores a plurality of pieces of attribute data (for example, names of "horse mackerel" and other fresh fish) in association with the "item" item as the attribute item, stores a plurality of pieces of attribute data (for example, signs indicating sizes such as "large", "medium", and "small") in association with the "size" item as the attribute item, and stores a plurality of pieces of attribute data (for example, place names such as "Hokkaido" and "Aomori") in association with the "production area" item as the attribute item.

When the data exchange system 1 receives the input-side external data from the input-side external database 3, the data exchange system 1 executes item mapping that associates the input-side external attribute item with one or more attribute items. For example, in the example of Fig. 1, the "item name" item in the input-side external database 3 is associated with the "item" item and the "size" item in the data exchange system 1. Further, the "production area" item in the input-side external database 3 is associated with the "production area" item in the data exchange system 1. Next, the data exchange system 1 executes code mapping on the basis of a result of the item mapping. That is, the data exchange system 1 associates the input-side external data with the attribute data corresponding to the attribute item. For example, the data exchange system 1 associates "large horse mackerel-Hokkaido" as the input-side external data with "horse mackerel" to be the attribute data of the "item" item in the data exchange system 1, "large" to be the attribute data of the "size" item, and "horse mackerel" to be the attribute data of the "production area" item. Then, the data exchange system 1 generates a set of the attribute data of the "item" item, the attribute data of the "size" item, and the attribute data of the "production area" item as "standard data". In the example of Fig. 1, data of a set of "horse mackerel" to be the attribute data of the "item" item as the attribute item, "large" to be the attribute data of the "size" item, and "Hokkaido" to be the attribute data of the "production area" item corresponds to standard data120.

Furthermore, the data exchange system 1 executes, for the output-side external database 7, item mapping that associates the output-side external attribute item with one or more attribute items. For example, in the example of Fig. 1, the "item name" item in the output-side external database 7 is associated with the "item" item and the "production area" item in the data exchange system 1. Further, the "size" item in the output-side external database 7 is associated with the "size" item in the data exchange system 1. Next, the data exchange system 1 executes code mapping on the basis of a result of the item mapping. That is, the data exchange system 1 associates the output-side external data with the attribute data corresponding to the attribute items. For example, the data exchange system 1 associates "Hokkaido horse mackerel-large" as the output-side external data with "horse mackerel" to be the attribute data of the "item" item in the data exchange system 1, "Hokkaido" to be the attribute data of the "production area" item, and "large" to be the attribute data of the "size" item.

The data exchange system 1 can receive the input-side external data and information identifying the output-side external database 7 to be the data output destination from the input-side external database 3, or can acquire the identification information in advance. The data exchange system 1 can execute the item mapping and/or the code mapping for the output-side external database 7 before, after, and/or when the input-side external data is received, using the identification information.

Subsequently, the data exchange system 1 refers to the result of the code mapping executed for the output-side external database 7, and generates output data to be supplied to the output-side external database 7. That is, the data exchange system 1 generates the output-side external attribute data corresponding to the output-side external attribute item of the output-side external database 7 using the standard data, and combines the generated output-side external attribute data to generate the output data. For example, the data exchange system 1 generates the output-side external attribute data corresponding to the "item name" attribute item as the output-side external attribute item, using the attribute data "horse mackerel" of the "item" attribute item of the standard data120 and the attribute data "Hokkaido" of the "production area" attribute item, on the basis of the results of the item mapping and the code mapping of the output-side external database 7. Similarly, the data exchange system 1 generates the output-side external attribute data corresponding to the "size" attribute item as the output-side external attribute item, using the attribute data "large" of the "size" attribute item of the standard data120, on the basis of the results of the item mapping and the code mapping of the output-side external database 7. Then, the data exchange system 1 generates output data by collecting the plurality of pieces of output-side external attribute data generated. The data exchange system 1 supplies the generated output data to the output-side external database 7.

As a result, even when the code system of the data of the composite attributes adopted in the input-side external database 3 and the code system of the data of the composite attributes adopted in the output-side external database 7 are different from each other, the data exchange system 1 according to the present embodiment can realize reliable, stable, and flexible data exchange by using the base database 12 and the like.

The communication network 5 is a mobile phone network and/or a communication network such as the Internet. The communication network 5 can also include communication networks such as a wired LAN and a wireless LAN. Further, each of the input-side external database 3 and the output-side external database 7 can be included in not only a predetermined database device but also a mobile communication terminal such as a mobile phone and a smart phone or an information processing terminal such as a personal computer, a notebook computer, and a tablet PC. When there is no communication network 5, the data exchange system 1 can also acquire various data from the outside via a recording medium such as a magnetic recording medium, an optical recording medium, and/or a semiconductor recording medium.

Further, the data handled by the data exchange system 1 is data that can be associated with a predetermined code, and is data that is used in a database including various data. The data may be data regarding items where each component is not completely standardized (that is, items having ambiguity in attributes). Further, the data may be data that can be classified by a hierarchical structure (that is, a tree structure). Further, the data may be data regarding products and/or goods distributed in a predetermined market, or data used between organizations (regardless of profit or non-profit) that exchange predetermined information. This data may include, for example, data regarding animal/plant classification, data regarding agricultural products, data regarding fresh food, data regarding clothing, or data regarding food. Further, the data may include at least one attribute data regarding fresh food, etc. whose producers, varieties/items, production areas, landing places, cultivation areas, cultivation methods, seasons, sizes, and/or ranks change from day to day. The fresh food includes fruits and vegetables, marine products, and the like.

### [Details of configuration of data exchange system 1]

Fig. 2 shows an example of a functional configuration of the data exchange system according to the embodiment of the present invention. The data exchange system 1 according to the present embodiment can be communicably connected to a plurality of input-side and/or output-side external databases. However, in order to simplify the description, in the following description example, in principle, the data exchange system 1 and one input-side external database and one output-side external database are communicably connected via the communication network 5.

The data exchange system 1 includes a data input unit 10 that receives input of data from the outside; a base database 12 that stores attribute data in association with a base code; an item mapping unit 14 that associates an input-side (output-side) external attribute item with an attribute item; a code mapping unit 16 that associates input-side (output-side) external attribute data with attribute data corresponding to the attribute item; a standard data conversion unit 18 that converts input-side external data into standard data; a conversion unit 20 that generates output data; an item mapping storage unit 22 that stores a processing result of the item mapping unit 14; a code mapping storage unit 24 that stores a processing result of the code mapping unit 16; an information supplement unit 26 that adds supplementary information related to the input-side external data to the standard data; a loss information management unit 28 that processes information lost from the input-side external data; and a data output unit 30 that outputs data to the outside. Each component included in the data exchange system 1 may have some or all functions of the other components. In the present embodiment, the "input-side (output-side)" means at least one of the input-side and the output-side. Further, the data exchange system 1 may be configured by combining a data exchange unit not having either the standard data conversion unit 18 or the conversion unit 20 and a data exchange unit having the standard data conversion unit 18 or the conversion unit 20 not included in the data exchange unit, among the above configurations.

### (Data input unit 10)

The data input unit 10 receives input of the input-side (output-side) external data from the input-side (output-side) external database. The data input unit 10 supplies the received data to the item mapping unit 14, the code mapping unit 16, the standard data conversion unit 18, and/or the information supplement unit 26.

When the data input unit 10 receives input of the input-side (output-side) external data represented by text data, the data input unit 10 can further receive the following three pieces of information. That is, as the format of a character string of the text data, there are a full-width character string, a half-width character string, and a full-width and half-width character string. The data input unit 10 receives input of "full-width character string information" to be information when the character string of the text data is the full-width character string, "half-width character string information" to be information when the character string is the half-width character string, and "full-width and half-width character string information" to be information when the full-width and half-width character string may be included. The data input unit 10 supplies the full-width character string information, the half-width character string information, and/or the full-width and half-width character string information to the information supplement unit 26.

### (Base database 12)

The base database 12 stores the attribute data included in the attribute item indicating the attribute of the data in association with the base code of the attribute data. That is, the base database 12 stores, for each of one or more attribute items indicating attributes, the attribute data included in each attribute item in association with the base code that uniquely identifies the attribute data. Specifically, the base database 12 stores one or more attribute data and a base code of the attribute data in association with an attribute item identifier that uniquely identifies the attribute item. The base database 12 can also have a separate table for a plurality of attribute items. In this case, each table stores one or more attribute data and a base code of the attribute data in association with the attribute item identifier of one attribute item. Further, the base database 12 is configured by a set of a plurality of tables.

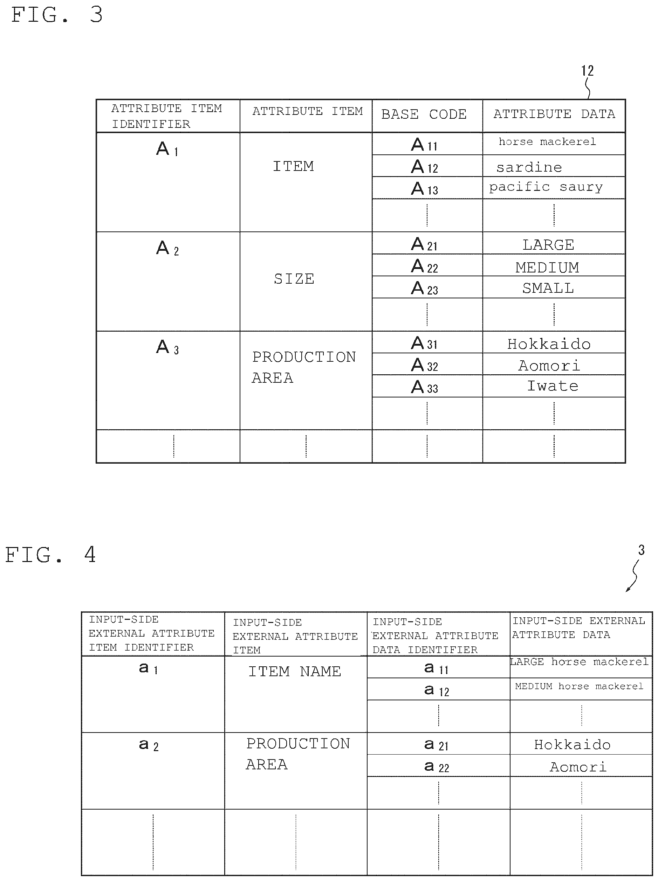

Fig. 3 shows an example of a data configuration of the base database according to the embodiment of the present invention. Specifically, an example in which information of marine products is stored will be described as an example of information stored in the base database 12.

The base database 12 stores base codes in association with attribute item identifiers. Further, the base database 12 can store attribute items corresponding to the attribute item identifiers and attribute data corresponding to the base codes. For example, the base database 12 stores a base code "A₁₁" (corresponding to the attribute data "horse mackerel"), a base code "A₁₂" (corresponding to the attribute data "sardine"), and a base code "A₁₃" (corresponding to the attribute data "pacific saury") in association with an attribute item identifier "A₁" of the "item" attribute item. Further, the base database 12 stores a base code "A₂₁" (corresponding to the attribute data "large"), a base code "A₂₂" (corresponding to the attribute data "medium"), and a base code "A₂₃" (corresponding to the attribute data "small") in association with an attribute item identifier "A₂" of the "size" attribute item. Further, the base database 12 stores a base code "A₃₁" (corresponding to the attribute data "Hokkaido"), a base code "A₃₂" (corresponding to the attribute data "Aomori"), and a base code "A₃₃" (corresponding to the attribute data "Iwate") in association with an attribute item identifier "A₃" of the "production area" attribute item.

As described above, the base database 12 stores the attribute data included in the predetermined attribute item in association with the base code. Further, the attribute items defined in the base database 12 are preferably items from which the composite attributes are excluded. That is, the attribute items are preferably defined by excluding a combination of a plurality of attributes and associating one attribute item with one attribute. Further, the attribute data stored in the base database 12 may be data corresponding to a minimum meaningful unit, that is, a morpheme. The base database 12 supplies the stored information to the item mapping unit 14 and/or the code mapping unit 16, according to the action from the item mapping unit 14 and/or the code mapping unit 16.

### (Item mapping unit 14)

The item mapping unit 14 refers to the base database 12 and associates the input-side (output-side) external attribute item with one or more attribute items. Specifically, the item mapping unit 14 refers to the base database 12 and associates the attribute item identifier of the attribute item corresponding to the input-side external attribute item with the input-side external attribute item identifier that uniquely identifies the input-side external attribute item. Further, the item mapping unit 14 refers to the base database 12 and associates the attribute item identifier of the attribute item corresponding to the output-side external attribute item with the output-side external attribute item identifier that uniquely identifies the output-side external attribute item. The input-side external data stored in the input-side external database 3 includes the input-side external attribute data corresponding to the input-side external attribute items indicating the attributes of the input-side external data. The output-side external data stored in the output-side external database includes the output-side external attribute data corresponding to the output-side external attribute items indicating the attributes of the output-side external data.

Further, when the input-side (output-side) external attribute item includes a plurality of attribute items defined in advance in the data exchange system 1, the item mapping unit 14 can associate the plurality of attribute items with one input-side (output-side) external attribute item. That is, when the input-side external attribute item includes a plurality of attribute items, the item mapping unit 14 associates the input-side external attribute item identifier with the attribute item identifier of each of the plurality of attribute items. Similarly, when the output-side external attribute item includes a plurality of attribute items, the item mapping unit 14 associates the output-side external attribute item identifier with the attribute item identifier of each of the plurality of attribute items. The item mapping unit 14 supplies a processing result to the item mapping storage unit 22.

### (Item mapping storage unit 22)

The item mapping storage unit 22 stores the processing result in the item mapping unit 14. That is, the item mapping storage unit 22 stores the corresponding attribute item as an item mapping table in association with the input-side (output-side) external attribute item of the input-side (output-side) external database. The item mapping storage unit 22 can also store an item mapping table for each input-side (output-side) external attribute item of the input-side (output-side) external database. In this case, the item mapping storage unit 22 stores as many item mapping tables as the number of input-side (output-side) external attribute items. When the input-side (output-side) external attribute item of the input-side (output-side) external database is an item having the composite attributes, a plurality of attribute items defined in the base database 12 is associated with one input-side (output-side) external attribute item. The item mapping storage unit 22 supplies the stored information to the code mapping unit 16, the conversion unit 20, and/or the loss information management unit 28, according to the action of the code mapping unit 16, the conversion unit 20, and/or the loss information management unit 28.

The item mapping unit 14 can also use a result obtained by previously associating the attribute item corresponding to the input-side external attribute item or the attribute item identifier of the attribute item with the input-side external attribute item or the input-side external attribute item identifier. The item mapping storage unit 22 can store the result in advance. In this case, the item mapping unit 14 refers to the item mapping storage unit 22 and statically associates the input-side (output-side) external attribute item with one or more attribute items.

Furthermore, the item mapping unit 14 may be controlled by artificial intelligence, and may dynamically associate the input-side (output-side) external attribute item with one or more attribute items. The item mapping unit 14 can update the association at any time by learning with the artificial intelligence. The artificial intelligence can be learned on the basis of information provided from an external server or the like via the communication network 5. The item mapping storage unit 22 can store a learning result by the artificial intelligence and can update the learning result at any time.

### (Code mapping unit 16)

The code mapping unit 16 refers to the base database 12 and/or the item mapping storage unit 22 and associates the input-side (output-side) external data with the attribute data corresponding to one or more attribute items and/or the base code of the attribute data. Specifically, the code mapping unit 16 refers to the item mapping storage unit 22 and associates an input-side external attribute data identifier of an input-side external attribute data with a base code included in an attribute item identified by an attribute item identifier associated with an input-side external attribute item identifier of the input-side external attribute item to which the input-side external attribute data belongs by the item mapping unit 14. Further, the code mapping unit 16 refers to the item mapping storage unit 22 and associates an output-side external attribute data identifier of the output-side external attribute data with a base code included in an attribute item identified by an attribute item identifier associated with an output-side external attribute item identifier of the output-side external attribute item to which the output-side external attribute data belongs by the item mapping unit 14. The input-side external attribute data itself may be used instead of the input-side external attribute data identifier, and the output-side external attribute data itself may be used instead of the output-side external attribute data identifier. In this case, the input-side external attribute data functions as the input-side external attribute data identifier, and the output-side external attribute data functions as the output-side external attribute data identifier.

Further, when the input-side external attribute data includes a plurality of pieces of attribute data, the code mapping unit 16 refers to the base database 12 and associates the input-side external attribute data identifier with the base code of each of the plurality of pieces of attribute data. Further, when the output-side external attribute data includes a plurality of pieces of attribute data, the code mapping unit 16 refers to the base database 12 and associates the output-side external attribute data identifier with the base code of each of the plurality of pieces of attribute data. As described above, the code mapping unit 16 performs associating (that is, linking) the input-side (output-side) external attribute data having the composite attributes with a plurality of pieces of corresponding attribute data stored in the base database 12.

When the code mapping unit 16 associates the input-side external attribute data identifier with the base code, the input-side external data may not be data having the composite attributes and there may be no attribute data corresponding to the input-side external attribute data. In this case, the code mapping unit 16 can also use, as the base code, null data (that is, null data) indicating "no mapping", for a portion having no corresponding attribute data.

For example, when the input-side external data of the input-side external database 3 includes "large horse mackerel-Hokkaido" (it includes the "item name" attribute item and the "production area" attribute item, the input-side external attribute data of the "item name" attribute item is "large horse mackerel", and the input-side external attribute data of the "production area" attribute item is "Hokkaido".) and "Aomori horse mackerel" (it includes the "item name" attribute item and the "production area" attribute item, the input-side external attribute data of the "item name" attribute item is "horse mackerel", and the input-side external attribute data of the "production area" attribute item is "Aomori".), the item mapping unit 14 associates the "item name" attribute item to be the input-side external attribute item with the "item" attribute item and the "size" attribute item of the base database 12, in accordance with the input-side external attribute data including the most attribute data. For the input-side external data "large horse mackerel-Hokkaido", the code mapping unit 16 associates the input-side external attribute data "large horse mackerel" with the attribute data "horse mackerel" (attribute data included in the "item" attribute item) and "large" (attribute data included in the "size" attribute item) of the base database 12. Further, the code mapping unit 16 associates the input-side external attribute data "Hokkaido", which configures a part of the input-side external data "large horse mackerel-Hokkaido", with the attribute data "Hokkaido" (attribute data included in the "production area" attribute item) of the base database 12.

On the other hand, for the case where the input-side external data is "Aomori horse mackerel", the code mapping unit 16 associates the input-side external attribute data "horse mackerel" with the attribute data "horse mackerel" (attribute data included in the "item" attribute item) of the base database 12. Since the input-side external attribute data corresponding to the attribute data of the "size" attribute item is not included in the input-side external data "Aomori horse mackerel", the code mapping unit 16 associates "null" with the input-side external attribute data "horse mackerel". The code mapping unit 16 associates the input-side external attribute data "Aomori", which configures a part of the input-side external data "Aomori horse mackerel", with the attribute data "Aomori" (attribute data included in the "production area" attribute item) of the base database 12. The code mapping unit 16 supplies a processing result to the standard data conversion unit 18 and/or the code mapping storage unit 24.

### (Code mapping storage unit 24)

The code mapping storage unit 24 stores the processing result in the code mapping unit 16. That is, the code mapping storage unit 24 stores the corresponding attribute data as a code mapping table in association with the input-side (output-side) external attribute data. The code mapping storage unit 24 supplies the stored information to the conversion unit 20, according to the action of the standard data conversion unit 18 and/or the conversion unit 20.

The code mapping unit 16 can also use a result obtained by previously associating the input-side (output-side) external data with the attribute data corresponding to one or more attribute items and/or the base code of the attribute data. The code mapping storage unit 24 can store the result in advance. In this case, the code mapping unit 16 refers to the code mapping storage unit 24, and statically associates the input-side (output-side) external data with the attribute data corresponding to one or more attribute items and/or the base code of the attribute data.

Further, the code mapping unit 16 may be controlled by the artificial intelligence, and may dynamically associate the input-side (output-side) external data with the attribute data corresponding to one or more attribute items and/or the base code of the attribute data. The code mapping unit 16 can update the association at any time by learning with the artificial intelligence. The artificial intelligence can be learned on the basis of information provided from an external server or the like via the communication network 5. The code mapping storage unit 24 can store a learning result by the artificial intelligence and can update the learning result at any time.

### (Standard data conversion unit 18)

The standard data conversion unit 18 converts the input-side external data into the standard data configured by the attribute data associated with the base code associated with the input-side external attribute data identifier in the code mapping unit 16. The standard data conversion unit 18 refers to the processing result of the code mapping unit 16 and/or the code mapping storage unit 24, and executes processing for converting the input-side external data into the standard data. The standard data conversion unit 18 supplies the standard data to the conversion unit 20 and/or the information supplement unit 26.

The data exchange system 1 can also have a standard data storage unit that stores the standard data. The standard data storage unit stores standard data defined in advance and/or standard data converted and generated by the standard data conversion unit 18. In this case, the standard data storage unit supplies the standard data to the conversion unit 20 and/or the information supplement unit 26, according to the action from the conversion unit 20 and/or the information supplement unit 26.

### (Conversion unit 20)

The conversion unit 20 refers to the item mapping storage unit 22 and/or the code mapping storage unit 24. Then, the conversion unit 20 refers to the base code associated with the output-side external attribute data identifier, and converts the input-side external data into output data for the output-side external database, using the attribute data corresponding to the base code and included in the standard data. At this stage, one or more attribute data is converted into output data according to composite attributes adopted by the code system of the output-side external database. The conversion unit 20 supplies the output data to the data output unit 30.

### (Information supplement unit 26)

When the input-side external data received by the data input unit 10 includes supplementary information related to the input-side external data, the supplementary information is supplied from the data input unit 10 to the information supplement unit 26. Then, the information supplement unit 26 adds the supplementary information to the standard data. The supplementary information is, for example, text data, numerical data, code data, graphic data, and/or audio data indicating the contents of the input-side (output-side) external data and related information. The information supplement unit 26 supplies the standard data to which the supplementary information has been added to the conversion unit 20. Then, the conversion unit 20 adds the supplementary information added to the standard data to the output data. When the supplementary information includes information on a character string such as a name, the character string represented by the information is a character string of any format of full-width, half-width, and full-width and half-width. The information on the character string added to the standard data may be information converted into all formats (hereinafter, referred to as the "complete format") of full-width, half-width, and full-width and half-width by processing to be described below.

In the case where the supplementary information is added to the standard data, if the supplementary information is the text data, the information supplement unit 26 converts the text data into a predetermined format, on the basis of full-width character string information, half-width character string information, or full-width and half-width character string information received from the data input unit 10. Specifically, when the information supplement unit 26 does not receive at least one of the full-width character string information, the half-width character string information, and the full-width and half-width character string information from the data input unit 10, the information supplement unit 26 automatically generates information other than the received information and adds the information as the supplementary information to the standard data. When the data input unit 10 receives the input of the text data, the information supplement unit 26 may analyze the text data and may associate the full-width character string information, the half-width character string information, or the full-width and half-width character string information with the text data.

For example, when the information supplement unit 26 does not receive the full-width character string information from the data input unit 10 and receives the full-width and half-width character string information, the information supplement unit 26 converts the half-width characters in the character string indicated by the full-width and half-width character string information into the full-width characters and generates the full-width character string information. Then, the information supplement unit 26 includes the full-width character string information, the half-width character string information, and the full-width and half-width character string information obtained by the generation in the supplementary information. Further, when the information supplement unit 26 does not receive the full-width character string information from the data input unit 10 and does not receive the full-width and half-width character string information, the information supplement unit 26 converts the half-width characters in the character string indicated by the half-width character string information into the full-width characters and generates the full-width character string information. Then, the information supplement unit 26 includes the full-width character string information and the half-width character string information obtained by the generation in the supplementary information.

Further, when the information supplement unit 26 does not receive the full-width and half-width character string information from the data input unit 10 and receives the full-width character string information, the information supplement unit 26 includes the full-width character string information as it is in the supplementary information. On the other hand, when the information supplement unit 26 does not receive the full-width and half-width character string information from the data input unit 10 and does not receive the full-width character string information, the information supplement unit 26 converts the half-width characters in the character string indicated by the half-width character string information into the full-width characters and generates the full-width character string information, or maintains the half-width characters in the character string indicated by the half-width character string information as they are. Then, the information supplement unit 26 includes the full-width character string information obtained by the generation as it is in the supplementary information, or includes the half-width character string information as it is in the supplementary information.

Further, when the information supplement unit 26 does not receive the half-width character string information from the data input unit 10 and receives the full-width and half-width character string information, the information supplement unit 26 includes converted character string information, obtained by converting the character string indicated by the full-width and half-width character string information into kanji and kana, in the supplementary information. On the other hand, when the information supplement unit 26 does not receive the half-width character string information from the data input unit 10 and does not receive the full-width and half-width character string information, the information supplement unit 26 includes half-width character string information, obtained by converting the character string indicated by the full-width character string information into kanji and kana, in the supplementary information.

As a result, in the data exchange system 1, even when the format of the character string handled by one external database is different from the format of the character string handled by another external database, the output data supplied from one external database (input-side external database) to another external database (output-side external database) can be converted into a predetermined character string format, so that stable data exchange between the external databases can be realized.

The information supplement unit 26 can function alone as a text data conversion system. The text data conversion system includes a text data acquisition unit that acquires text data from the outside, a text data determination unit that determines the type of text data acquired by the text data acquisition unit, and a text data conversion unit that converts the text data into a predetermined format, on the basis of a determination result of the text data determination unit. The type of text data is a type indicating that the text data is a full-width character string, a type indicating that the text data is a half-width character string, or a type indicating that the text data is a full-width and half-width character string. Further, the text data conversion system can include a text data output unit that outputs the text data converted into the predetermined format and/or a flag unit that adds a flag, which indicates whether or not the output text data is data automatically generated by the text data conversion system, to the output text data.

The text data determination unit analyzes the acquired text data, and determines full-width character string information as the type of text data when the character string of the text data is a full-width character string, half-width character string information as the type of text data when the character string is a half-width character string, and full-width and half-width character string information as the type of text data when the character string may be a character string in which a full-width character string and a half-width character string are mixed. Similarly to the above description of the information supplement unit 26, the text data conversion unit executes conversion processing such as conversion of half-width characters of the acquired text data into full-width characters and kanji/kana conversion, on the basis of the text data acquired by the text data acquisition unit, the text data not acquired by the text data acquisition unit, and the determination result of the text data determination unit.

The flag unit adds a flag indicating whether or not the text data conversion unit has automatically generated the text data to the converted text data. For example, when the text data conversion unit converts half-width of the text data into full-width and/or when the text data conversion unit converts full-width into half-width, the flag unit does not add a flag indicating that it has been automatically generated or adds a flag indicating that it has not been automatically generated. On the other hand, when the text data conversion unit executes the kanji/kana conversion processing, the flag unit adds the flag indicating that the text data has been automatically generated to the converted text data.

As a result, the text data conversion system can standardize the type of text data to be output, even when the type of text data to be input is not standardized. Further, the text data conversion system can add a predetermined flag to the text data to be output, so that it is possible to easily determine whether or not the text data to be output has been automatically generated by the text data conversion system.

### (Loss information management unit 28)

The loss information management unit 28 refers to the base code associated with the output-side external attribute data identifier in the conversion unit 20, and executes predetermined processing when the base code corresponding to the attribute data included in the standard data is not associated with the output-side external attribute data identifier. For example, in the case where the conversion unit 20 converts the input-side external data into the output data, using the attribute data included in the standard data, when there is an attribute item not included in the output-side external attribute item, processing to define the attribute data of the attribute item as loss information or processing to add the loss information to the output data as character string information is the predetermined processing described above. Further, when loss information occurs and/or when loss information occurs and character string information is added to the output data, the loss information management unit 28 may output error information indicating that a loss has occurred in the input-side (output-side) external database via the data output unit 30. The loss information management unit 28 supplies information indicating a processing result to the conversion unit 20. The conversion unit 20 includes the processing result in the loss information management unit 28 in the output data or adds it.

### (Data output unit 30)

The data output unit 30 supplies the output data to the output-side external database 7.

Fig. 4 shows an example of a data configuration of the input-side external database according to the embodiment of the present invention.

The input-side external database 3 stores one or more input-side external data. Specifically, the input-side external database 3 stores one or more input-side external attribute data identifiers in association with input-side external attribute item identifiers that uniquely identify input-side external attribute items. The input-side external attribute data identifier is an identifier for uniquely identifying the input-side external attribute data. Further, the input-side external database 3 stores the input-side external attribute data in association with the input-side external attribute data identifier. Further, the input-side external database 3 can also store the input-side external attribute item in association with the input-side external attribute item identifier. The input-side external data is configured by a combination of input-side external attribute data belonging to each of one or more input-side external attribute items. In other words, the input-side external data is configured by a combination of input-side external attribute data included in each of n input-side external attribute items (however, n is an integer equal to or larger than 0, and in the case of n = 0, a "null" value is stored).

For example, the case where the input-side external database 3 stores data such as "large horse mackerel-Hokkaido", "medium horse mackerel-Hokkaido", "large horse mackerel-Aomori", and "medium horse mackerel-Aomori" as names of marine products to be the input-side external data will be described. As shown in Fig. 4, the input-side external database 3 stores "large horse mackerel" (the input-side external attribute data identifier is "an"), "medium horse mackerel" (the input-side external attribute data identifier is "a₁₂"), and the like as a plurality of pieces of input-side external attribute data, in association with the "item name" attribute item (the input-side external attribute item identifier is "a₁") as the input-side external attribute item. Further, the input-side external database 3 stores "Hokkaido" (the input-side external attribute data identifier is "a₂₁"), "Aomori" (the input-side external attribute data identifier is "a₂₂"), and the like as a plurality of pieces of input-side external attribute data, in association with the "production area" attribute item (the input-side external attribute item identifier is "a₂") as the input-side external attribute item. Further, the input-side external database 3 stores the input-side external data as a combination of input-side external attribute data belonging to one or more input-side external attribute items. As an example, the input-side external database 3 stores "large horse mackerel-Hokkaido" as the input-side external data as a combination of the input-side external attribute data "large horse mackerel" associated with the input-side external attribute item identifier "a₁" and the input-side external attribute data "Hokkaido" associated with the input-side external attribute item identifier "a₂").

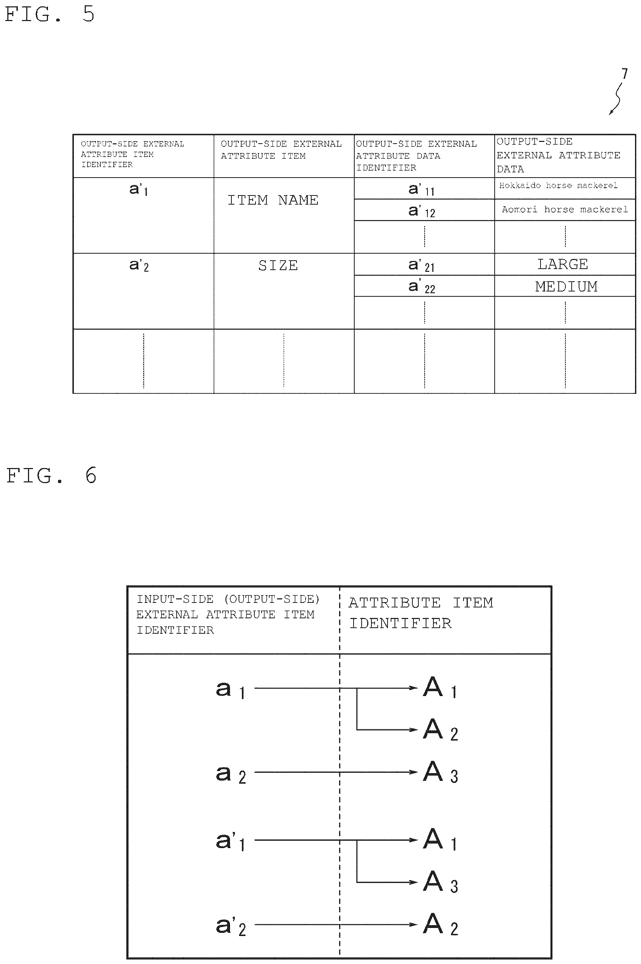

Fig. 5 shows an example of a data configuration of the output-side external database according to the embodiment of the present invention.

The output-side external database 7 stores one or more output-side external data. Specifically, the output-side external database 7 stores one or more output-side external attribute data identifiers in association with output-side external attribute item identifiers that uniquely identify output-side external attribute items. The output-side external attribute data identifier is an identifier for uniquely identifying the output-side external attribute data. Further, the output-side external database 7 stores the output-side external attribute data in association with the output-side external attribute data identifier. Further, the output-side external database 7 can also store the output-side external attribute item in association with the output-side external attribute item identifier. The output-side external data is configured by a combination of output-side external attribute data belonging to each of one or more output-side external attribute items. In other words, the output-side external data is configured by a combination of output-side external attribute data included in each of m output-side external attribute items (however, m is an integer equal to or larger than 0, and in the case of m = 0, a "null" value is stored).

For example, the case where the output-side external database 7 stores data such as "Hokkaido horse mackerel-large", "Hokkaido horse mackerel-medium", "Aomori horse mackerel-large", and "Aomori horse mackerel-medium" as names of marine products to be the output-side external data will be described. As shown in Fig. 5, the output-side external database 7 stores "Hokkaido horse mackerel" (the output-side external attribute data identifier is "a'₁₁"), "Aomori horse mackerel" (the output-side external attribute data identifier is "a'₁₂"), and the like as a plurality of pieces of output-side external attribute data, in association with the "item name" attribute item (the output-side external attribute item identifier is "a'₁") as the output-side external attribute item. Further, the output-side external database 7 stores "large" (the output-side external attribute data identifier is "a'₂₁"), "medium" (the output-side external attribute data identifier is "a'₂₂"), and the like as a plurality of pieces of output-side external attribute data, in association with the "size" attribute item (the output-side external attribute item identifier is "a'₂") as the output-side external attribute item. Further, the output-side external database 7 stores the output-side external data as a combination of output-side external attribute data belonging to one or more output-side external attribute items. As an example, the output-side external database 7 stores "Hokkaido horse mackerel-large" as the output-side external data as a combination of the output-side external attribute data "Hokkaido horse mackerel" associated with the output-side external attribute item identifier "a'₁" and the output-side external attribute data "large" associated with the output-side external attribute item identifier "a'₂").

### (Item mapping processing)

Fig. 6 shows an example of an overview of the item mapping processing in the item mapping unit according to the embodiment of the present invention. Fig. 6 shows an example of an overview when the item mapping processing is executed using the base database 12, the input-side external database 3, and the output-side external database 7 described in Figs. 3 to 5.

The item mapping unit 14 refers to the base database 12 and associates the input-side (output-side) external attribute item with one or more attribute items. Here, as can be seen by referring to Figs. 3 and 4, the "item name" attribute item (the input-side external attribute item identifier is "a₁") as the input-side external attribute item has composite attributes in which the "item" attribute item (the attribute item identifier is "A₁") and the "size" attribute item (the attribute item identifier is "A₂") as the attribute items in the base database 12 are combined. Therefore, the item mapping unit 14 associates the input-side external attribute item identifier "a₁" with the attribute item identifiers "A₁" and "A₂". Further, the "production area" attribute item (the input-side external attribute item identifier is "a₂") as the input-side external attribute item corresponds to the "production area" attribute item (the attribute item identifier is "A₃") as the attribute item of the base database 12. Therefore, the item mapping unit 14 associates the input-side external attribute item identifier "a₂" with the attribute item identifier "A₃". For example, by performing morphological analysis on the input-side external data received by the data input unit 10 and searching for the attribute data stored in the base database 12 using morphemes obtained by the morphological analysis, the item mapping unit 14 can specify the attribute items configuring the input-side external data.

The "item name" attribute item (the output-side external attribute item identifier is "a₁") as the output-side external attribute item has composite attributes in which the "item" attribute item (the attribute item identifier is "A₁") and the "production area" attribute item (the attribute item identifier is "A₃") as the attribute items in the base database 12 are combined. Therefore, the item mapping unit 14 associates the output-side external attribute item identifier "a₁" with the attribute item identifiers "A₁" and "A₃". Further, the "size" attribute item (the output-side external attribute item identifier is "a₂") as the output-side external attribute item corresponds to the "size" attribute item (the attribute item identifier is "A₂") as the attribute item of the base database 12. Therefore, the item mapping unit 14 associates the output-side external attribute item identifier "a₂" with the attribute item identifier "A₂". Similarly to the case of the input-side external data, for example, on the basis of morphological analysis on the output-side external data received by the data input unit 10, the item mapping unit 14 can specify the attribute items configuring the output-side external data.

The present embodiment can allow the item mapping unit 14 to further associate the input-side (output-side) external attribute item identifier with the attribute item identifier already associated with a certain input-side (output-side) external attribute item identifier (hereinafter, it may be referred to as "duplicate mapping"). For example, the item mapping unit 14 may duplicately associate the predetermined input-side external attribute item identifier "a₃" with the attribute item identifier "A₃" already associated with the input-side external attribute item identifier "a₂". In this case, the item mapping unit 14 can prioritize one of the association to the input-side external attribute item identifier "a₂" and the association to "a₃" over the other. Which is prioritized is preferably based on a predetermined criterion. From the viewpoint of simplifying the processing in the item mapping unit 14, the duplicate mapping may be prohibited, and the input-side (output-side) external attribute item identifier previously associated with the attribute item identifier may be prioritized.

### (Code mapping processing)

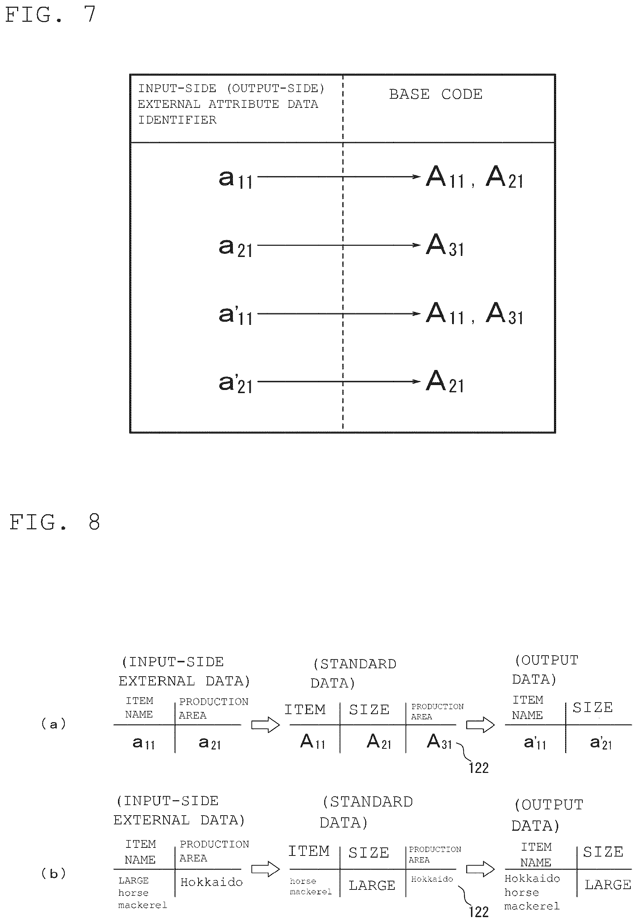

Fig. 7 shows an example of an overview of the code mapping processing in the code mapping unit according to the embodiment of the present invention. Fig. 7 shows an example of an outline when the code mapping processing is executed using the base database 12, the input-side external database 3, and the output-side external database 7 described in Figs. 3 to 5.

The code mapping unit 16 refers to the base database 12 and/or the item mapping storage unit 22 and associates the input-side (output-side) external data with the attribute data corresponding to one or more attribute items and/or the base code of the attribute data. For example, as shown in Fig. 6, the attribute item identifiers "A₁" and "A₂" are associated with the input-side external attribute item identifier "a₁", and the attribute item identifier "A₃" is associated with the input-side external attribute item identifier "a₂". For example, when the input-side external data is "large horse mackerel-Hokkaido", the code mapping unit 16 refers to the result of the item mapping processing shown in Fig. 6 and the base database 12, and associates the input-side external attribute data identifier (that is, "a₁₁") corresponding to the input-side external attribute data (that is, "large horse mackerel"), which configures the input-side external data, with the base codes (that is, the base codes "A₁₁" and "A₂₁") included in the attribute items identified by the attribute item identifiers "A₁" and "A₂", as shown in Fig. 7.

As described above in the columns of the code mapping unit 16 and the code mapping storage unit 24, the code mapping unit 16 can statically or dynamically determine which attribute data stored in the base database 12 the input-side external attribute data identified by the input-side external attribute data identifier is matched with and/or which combination of attribute data the input-side external attribute data is configured by. Further, the code mapping unit 16 performs morphological analysis on the input-side external data and compares morphemes obtained by the analysis with the attribute data stored in the base database 12, so that the code mapping unit 16 can determine which attribute data stored in the base database 12 the input-side external attribute data identified by the input-side external attribute data identifier is matched with and/or which combination of attribute data the input-side external attribute data is configured by. In the same way as the above, the code mapping unit 16 associates the input-side external attribute data identifier (that is, "a₂₁") corresponding to the input-side external attribute data (that is, "Hokkaido"), which configures the input-side external data, with the base code (that is, the base codes "A₃₁") included in the attribute item identified by the attribute item identifier "A₃".

Further, as shown in Fig. 6, the output-side external attribute item identifier "a'₁" is associated with the attribute item identifiers "A₁" and "A₃", and the output-side external attribute item identifier "a'₂" is associated with the attribute item identifier "A₂". Then, in the same way as the above, for example, when the output-side external data is "Hokkaido horse mackerel-large", the code mapping unit 16 refers to the result of the item mapping processing shown in Fig. 6 and the base database 12, and associates the output-side external attribute data identifier (that is, "a'₁₁") corresponding to the output-side external attribute data (that is, "Hokkaido horse mackerel"), which configures the output-side external data, with the base codes (that is, the base codes "A₁₁" and "A₃₁") included in the attribute items identified by the attribute item identifiers "A₁" and "A₃", as shown in Fig. 7. Further, the code mapping unit 16 associates the output-side external attribute data identifier (that is, "a'₂₁") corresponding to the output-side external attribute data (that is, "large"), which configures the output-side external data, with the base code (that is, the base code "A₂₁") included in the attribute item identified by the attribute item identifier "A₂".

### (Generation of output data)

Fig. 8 shows an example of an overview of generation of output data according to the embodiment of the present invention. Fig. 8 shows an example of an overview when the output data is generated using the base database 12, the input-side external database 3, and the output-side external database 7 described in Figs. 3 to 7.

First, one or more input-side external attribute data configuring the input-side external data (for example, the input-side external data is "large horse mackerel-Hokkaido") received by the data input unit 10 are linked to the corresponding attribute data in the base database 12, on the basis of the processing in the item mapping unit 14 and the code mapping unit 16. That is, in the code mapping unit 16, the input-side external attribute data identifier of the input-side external attribute data and the base code of the corresponding attribute data are linked. Then, the standard data conversion unit 18 uses the attribute data corresponding to the base code associated with the input-side external attribute data identifier to convert the input-side external data into standard data.

For example, as shown in Fig. 7, by the processing of the code mapping unit 16, the input-side external attribute data identifier "a₁₁" is associated with the base codes "A₁₁" and "A₂₁", and the input-side external attribute data identifier "a₂₁" is associated with the base code "A₃₁". Then, as shown in Fig. 8 (a), the standard data conversion unit 18 converts the input-side external data, which includes the input-side external attribute data (for example, "large horse mackerel") corresponding to the input-side external attribute data identifier "a₁₁" and the input-side external attribute data (for example, "Hokkaido") corresponding to the input-side external attribute data identifier "a₂₁", into standard data122 as one record to be a set of base codes associated with the input-side external attribute data identifiers.

Further, as shown in Fig. 7, by the processing of the code mapping unit 16, the output-side external attribute data identifier "a'₁₁" is associated with the base codes "A₁₁" and "A₃₁", and the output-side external attribute data identifier "a'₂₁" is associated with the base code "A₂₁". The conversion unit 20 refers to the code mapping storage unit 24, and refers to the base code included in the standard data122 to be the base code associated with the output-side external attribute data identifier. Then, the conversion unit 20 converts the input-side external data into output data for the output-side external database, using the attribute data corresponding to the base code and included in the standard data122. For example, as shown in Fig. 8(a), the conversion unit 20 converts the input-side external data into the output data, which includes the output-side external attribute data (for example, "Hokkaido horse mackerel") corresponding to the output-side external attribute data identifier "a'₁₁" and the output-side external attribute data (for example, "large") corresponding to the output-side external attribute data identifier "a'₂₁". For example, the conversion unit 20 executes the conversion processing by combining attribute data corresponding to the base code included in the standard data122. Then, the conversion unit 20 supplies the output data to the data output unit 30.

Fig. 8(b) is an example in which the input-side (output-side) external data, the standard data, and the output data are displayed using the input-side (output-side) external attribute data identifier, the base code, the corresponding input-side (output-side) external attribute data, and the attribute data shown in Fig. 8(a).

### (Management of loss information)

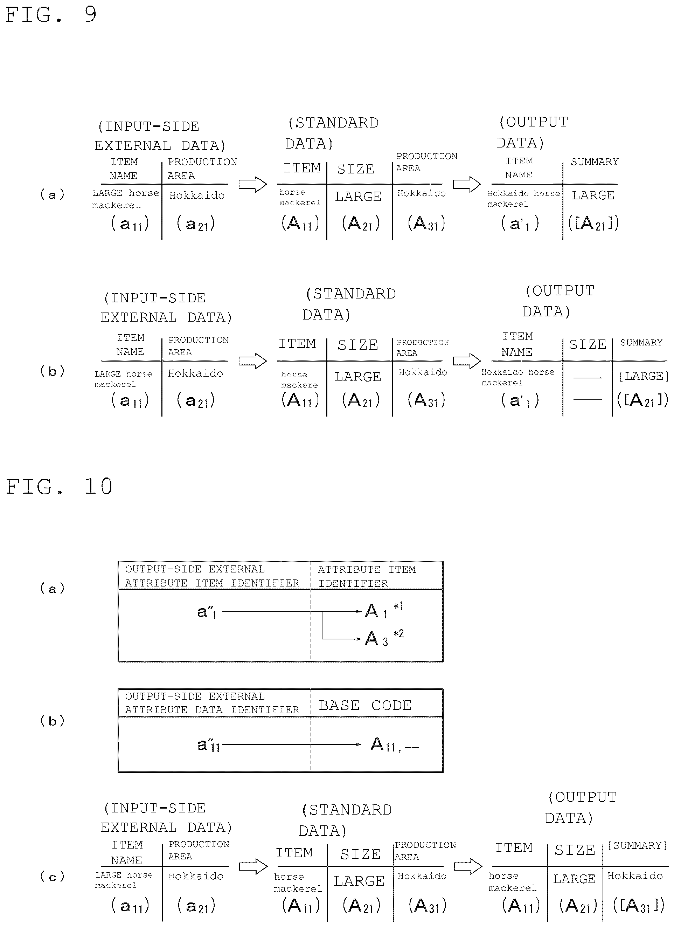

Figs. 9 and 10 show an example of an overview of the operation of the loss information management unit according to the embodiment of the present invention.

The data exchange system 1 is a system for realizing flexible data exchange between the input-side external database 3 and the output-side external database 7 having different code systems, for data having composite attributes. When information of the input-side external database 3 is supplied to the output-side external database 7, it is assumed that information loss (or loss) occurs due to the difference between the code system adopted by the input-side external database 3 and the code system adopted by the output-side external database 7. The loss information management unit 28 has a function of minimizing the loss (or loss) of the information. That is, the input-side external database 3 and the output-side external database 7 can hold character string information by items such as "summary" and/or "standard", for the purpose of managing supplementary information that cannot be managed by only the input-side (output-side) external attribute data identifiers, when the data having the composite attributes is managed. The loss information management unit 28 can deliver the character string information from the input-side external database 3 to the output-side external database 7. Specifically, the loss information management unit 28 generates, as character string information, information that cannot be delivered from the input-side external database 3 to the output-side external database 7 on the basis of conversion between the identifiers such as the base codes, and adds the generated character string information to the output data. The item mapping storage unit 22 can store character string information items for character string information output in association with the input-side (output-side) external attribute items of the input-side (output-side) external database.

### [Single item conversion-insufficient external attribute items]

First, Fig. 9(a) shows an example of the operation of the loss information management unit 28 when the attribute item cannot be linked to the output-side external attribute item of the output-side external database 7 even though the attribute item is linked to the input-side external attribute item (that is, when there is no output-side external attribute item corresponding to the attribute item in the output-side external database 7), as a result of the item mapping processing of the item mapping unit 14. In this case, a part of the attribute data configuring the standard data generated by converting the input-side external data by the standard data conversion unit 18 cannot be included in the output data, and the information loss occurs. Therefore, the loss information management unit 28 adds the lost information to the output data as a character string for the purpose of preventing the loss of the information.

For example, Fig. 9(a) shows an example in which the "size" attribute item is not defined in the output-side external attribute item in the output-side external database 7. In this case, unlike the example in Fig. 6, the item mapping unit 14 does not associate the attribute item identifiers (for example, the attribute item identifier "A2" that identifies the "size" attribute item) with some output-side external attribute item identifiers (for example, the output-side external attribute item identifier "a'2" that identifies the "size" attribute item). Therefore, the loss information management unit 28 adds the character string information of the attribute data of the standard data belonging to the attribute item not associated with the output-side external attribute item, which is the attribute item included in the standard data, to the output data. In the example of Fig. 9(a), the loss information management unit 28 adds a "summary" item to the output data, and adds character string information (for example, character string information "large" indicating the size) of the attribute data to the "summary" item. In Fig. 9 (a), identifiers for identifying the respective data are displayed in the lower steps of the input-side (output-side) external attribute data (for example, "large horse mackerel", "Hokkaido", and the like), the attribute data (for example, "horse mackerel", "large, "Hokkaido", and the like) configuring the standard data, and the attribute data (for example, "Hokkaido horse mackerel" and the like) of the output data. The same is applied to Fig. 9 (b) and Fig. 10.

### [Single item conversion-code mapping error]

Fig. 9(b) shows an overview of the operation of the loss information management unit 28 when the attribute item linked to the input-side external attribute item can be associated with the output-side external attribute item, as the result of the item mapping processing of the item mapping unit 14, but there is at least one output-side external attribute data identifier that cannot be associated with the base code, as the result of the code mapping processing of the code mapping unit 16. Even in this case, a part of the attribute data configuring the standard data generated by converting the input-side external data by the standard data conversion unit 18 cannot be included in the output data, and the information loss occurs. Therefore, the loss information management unit 28 adds the lost information to the output data as a character string for the purpose of preventing the loss of the information.

For example, Fig. 9(b) shows an example in which, in the output-side external database 7, the "size" attribute item as the output-side external attribute item corresponding to the attribute item (for example, the "size" attribute item) of the standard data is defined, but there is no output-side external attribute data corresponding to the attribute data (for example, the attribute data "large") included in the attribute item of the standard data. In this case, unlike the example in Fig. 7, the code mapping unit 16 does not associate the base code (for example, the base code "A₂₁" for identifying the attribute data "large") with some output-side external attribute data identifiers (for example, the output-side external attribute data identifier "a'₂₁" for identifying the output-side external attribute data "large") (or, a null value or "0 (zero)" is associated). Therefore, the loss information management unit 28 adds the character string information of the attribute data not associated with the output-side external attribute data identifier, which is the attribute item included in the standard data, to the output data. In the example of Fig. 9(b), the loss information management unit 28 adds a "summary" item to the output data, and adds character string information (for example, character string information "large" indicating the size) of the attribute data to the "summary" item. The loss information management unit 28 can add a null value, "0 (zero)", or a predetermined error code and character string information of lost attribute data added as the "summary" item to the output data, for the output-side external attribute data that cannot be converted.

### [Composite attribute data conversion-code mapping error]

Figs. 10(a) to 10(c) show an overview of the operation of the loss information management unit 28 when data having composite attributes is not registered in the output-side external database 7. For example, in the example of Fig. 5, the output-side external attribute data is data defined by a combination of a plurality of pieces of attribute data in the base database 12. However, when the output-side external attribute data is not data configured by the combination of the plurality of pieces of attribute data in the base database 12, but data configured by only a part of the plurality of pieces of attribute data, some attribute data included in the standard data obtained by converting the input-side external data may not be included in the output data.

For example, it is assumed that the input-side external data includes the "item name" attribute item and the "production area" attribute item as the input-side external attribute items, like "large horse mackerel-Hokkaido", and in the item mapping unit 14, the "item name" attribute item is associated with the "item name" attribute item and the "size" attribute item as the attribute items of the base database 12 and the "production area" attribute item of the input-side external attribute item is associated with the "production area" attribute item of the attribute item. On the other hand, it is assumed that the output-side external data includes the "item name" attribute data and the "size" attribute data as the output-side external attribute items, like "large horse mackerel", and in the item mapping unit 14, the "item name" attribute item is associated with the "item" attribute item as the attribute item and the "size" attribute item of the output-side external attribute item is associated with the "size" attribute item of the attribute item. Then, the attribute data corresponding to the "production area" attribute item included in the standard data (attribute data linked to the input-side external attribute data associated with the "production area" attribute item of the input-side external attribute item) is not included in the output data generated by the conversion unit 20.

Therefore, the loss information management unit 28 determines predetermined priority in advance for the processing result of the item mapping unit 14 stored in the item mapping storage unit 22, sequentially excludes items with low priority, and adds information on the excluded items to the output data as character string information.

For example, as shown in Fig. 10(a), priorities (Fig. 10 shows that the attribute item identifier associated with "*1" has higher priority than the attribute item identifier associated with "*2".) are associated with a plurality of attribute item identifiers associated with the output-side external attribute item identifiers (for example, output-side external attribute item identifier "a"₁"). As an example, when the output-side external database 7 has the "item name" attribute item (the output-side external attribute item identifier is "a"₁") as the output-side external attribute item, the item mapping unit 14 associates the "item name" attribute item with the "item" attribute item (the attribute item identifier is "A₁") and the "production area" attribute item (the attribute item identifier is "A₃") as the attribute items of the base database 12. Then, the loss information management unit 28 determines that the output-side external data includes only the output-side external attribute data corresponding to the "item" attribute item as the attribute item, on the basis of the result of the morphological analysis of the output-side external data, and associates the "item" attribute item with higher priority than the "production area" attribute item.

Further, as shown in Fig. 10(b), by the code mapping processing of the code mapping unit 16, the base code (the base code "A₁₁" corresponding to the attribute data "horse mackerel") is associated with the output-side external attribute data identifier (for example, the output-side external attribute data identifier "a"₁₁" for identifying the output-side external attribute data "horse mackerel"). However, since the output-side external data in Fig. 10 does not include the output-side external attribute data corresponding to the "production area" attribute item, unlike the example of Fig. 7, the base code "A₃₁" of the attribute data corresponding to the "production area" attribute item is not associated (a null value, "0 (zero)", or the like may be associated).

Then, the conversion unit 20 generates output data using the standard data. In this case, the conversion unit 20 supplies information indicating that the attribute data corresponding to the "production area" attribute item cannot be included in the output data to the loss information management unit 28. In accordance with this information, the loss information management unit 28 adds the "summary" item to the output data, and adds character string information (for example, character string information "Hokkaido") of the attribute data of the "production area" attribute item as the attribute item corresponding to the "production area" attribute item to be the input-side external attribute item of the input-side external data, to the "summary" item. As a result, the output data has the format in which the character string information "Hokkaido" is added to "large horse mackerel" (the output-side external attribute data of the "item name" attribute item of the output-side external attribute item is "horse mackerel" and the output-side external attribute data of the "size" attribute item is "large".). As described above, the loss information management unit 28 can sequentially exclude the attribute items having low priority and can add the attribute data corresponding to the excluded attribute items to the output data as character string information. The loss information management unit 28 may cause the data output unit 30 to output error information indicating that information has been generated, when the above-described loss of information has occurred and conversion to a character string item has occurred.

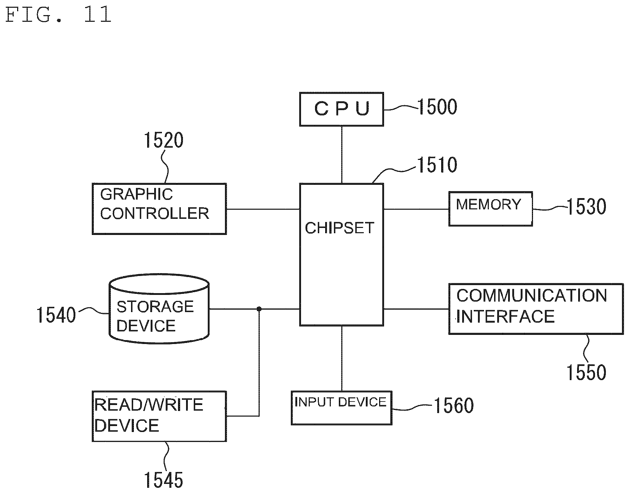

Fig. 11 shows an example of a hardware configuration of the data exchange system according to the present embodiment.

The data exchange system 1 according to the present embodiment includes a CPU 1500, a graphic controller 1520, a memory 1530 such as a random access memory (RAM), a read-only memory (ROM), and/or a flash ROM, a storage device 1540 for storing data, a read/write device 1545 for reading data from and/or writing data to a recording medium, an input device 1560 for inputting data, a communication interface 1550 for transmitting/receiving data to/from an external communication device, and a chipset 1510 for connecting the CPU 1500, the graphic controller 1520, the memory 1530, the storage device 1540, the read/write device 1545, the input device 1560, and the communication interface 1550 so that they can communicate with each other. The components such as the CPU 1500 are one or more CPUs and the like, and can include a plurality of CPUs and the like.

The chipset 1510 mutually connects the memory 1530, the CPU 1500 that accesses the memory 1530 to execute predetermined processing, and the graphic controller 1520 that controls display of an external display device, so that the chipset 1510 deliveries data between the components. The CPU 1500 operates on the basis of a program stored in the memory 1530 and controls each component. The graphic controller 1520 displays an image on a predetermined display device, on the basis of image data temporarily stored on a buffer provided in the memory 1530.

Further, the chipset 1510 connects the storage device 1540, the read/write device 1545, and the communication interface 1550. The storage device 1540 stores programs and data to be used by the CPU 1500 of the data exchange system. The storage device 1540 is, for example, a flash memory. The read/write device 1545 reads the program and/or data from the storage medium storing the program and/or data, and stores the read program and/or data in the storage device 1540. The read/write device 1545 acquires a predetermined program from a server on the Internet via the communication interface 1550, for example, and stores the acquired program in the storage device 1540.

The communication interface 1550 executes data transmission/reception with an external device via a communication network. Further, when the communication network is disconnected, the communication interface 1550 can execute data transmission/reception with an external device without using the communication network. The input device 1560 such as a tablet or a microphone is connected to the chipset 1510 via a predetermined interface.

A data exchange program stored in the storage device 1540 is provided to the storage device 1540 via a communication network such as the Internet or a recording medium such as a magnetic recording medium or an optical recording medium. Further, the data exchange program stored in the storage device 1540 is executed by the CPU 1500. The data exchange program can be installed in the computer by using the recording medium. The recording medium storing the program may be a non-transitory recording medium such as a CD-ROM or a DVD.

An information input program executed by the data exchange system 1 works on the CPU 1500 to cause the data exchange system 1 to function as the data input unit 10, the base database 12, the item mapping unit 14, the code mapping unit 16, the standard data conversion unit 18, the conversion unit 20, the item mapping storage unit 22, the code mapping storage unit 24, the information supplement unit 26, the loss information management unit 28, and the data output unit 30 described in Figs. 1 to 10.

### (Effects of embodiment)

The data exchange system 1 according to the present embodiment can create the standard data by the item mapping processing and the code mapping processing, using the base database 12. Therefore, even if the input-side (output-side) external databases use data having composite attributes in different code systems, in the case where the input-side external data is supplied from the input-side external database to the output-side external database, the input-side external data can be converted into output data of the format that can be processed in the output-side external database. As a result, according to the data exchange system 1, it is possible to realize reliable and stable data exchange between databases having different code formats.

While the embodiments of the present invention have been described above, the embodiments described above do not limit the invention according to the claims. Further, it should be noted that all combinations of the features described in the embodiments are not essential to the means for solving the problems of the invention. Further, the technical elements of the embodiments described above may be applied independently, or may be applied by being divided into a plurality of parts such as program parts and hardware parts.

### Reference Signs List

- 1: Data exchange system
- 3: Input-side external database
- 5: Communication network
- 7: Output-side external database
- 10: Data input unit
- 12: Base database
- 14: Item mapping unit
- 16: Code mapping unit
- 18: Standard data conversion unit
- 20: Conversion unit
- 22: Item mapping storage unit
- 24: Code mapping storage unit
- 26: Information supplement unit
- 28: Loss information management unit
- 30: Data output unit
- 120, 122: Standard data
- 1500: CPU
- 1510: Chipset
- 1520: Graphic controller
- 1530: Memory
- 1540: Storage device
- 1545: Read/write device
- 1550: Communication interface
- 1560: Input device

## Claims

1. A data exchange system (1) comprising:
a base database (12) configured to store attribute data included in an attribute item indicating an attribute in association with a base code of the attribute data;
an item mapping unit (14) configured to, when input-side external data is stored in an input-side external database (3) and includes input-side external attribute data corresponding to an input-side external attribute item indicating an attribute of the input-side external data, associate the attribute item corresponding to the input-side external attribute item with the input-side external attribute item, and to, when output-side external data is stored in an output-side external database (7) and includes output-side external attribute data corresponding to an output-side external attribute item indicating an attribute of the output-side external data, associate the attribute item corresponding to the output-side external attribute item with the output-side external attribute item;
a code mapping unit (16) configured to associate the input-side external attribute data with the base code included in the attribute item associated with the input-side external attribute item to which the input-side external attribute data belongs by the item mapping unit (14), and to associate the output-side external attribute data with the base code included in the attribute item associated with the output-side external attribute item to which the output-side external attribute data belongs by the item mapping unit (14);
**characterized by** further comprising
a standard data conversion unit (18) configured to convert the input-side external data into standard data (120, 122) configured by the attribute data associated with the base code associated with the input-side external attribute data; and
a conversion unit (20) configured to refer to the base code associated with the output-side external attribute data, and to convert the input-side external data into output data for the output-side external database, using the attribute data corresponding to the base code and included in the standard data (120, 122).

2. The data exchange system (1) according to claim 1, wherein,
when the input-side external attribute item includes a plurality of the attribute items, the item mapping unit (14) associates the input-side external attribute item with each of the plurality of attribute items, and
when the output-side external attribute item includes a plurality of the attribute items, the item mapping unit (14) associates the output-side external attribute item with each of the plurality of attribute items.

3. The data exchange system (1) according to claim 1 or 2, wherein,
when the input-side external attribute data includes a plurality of pieces of the attribute data, the code mapping unit associates the input-side external attribute data with the base code of each of the plurality of pieces of attribute data, and
when the output-side external attribute data includes a plurality of pieces of the attribute data, the code mapping unit associates the output-side external attribute data with the base code of each of the plurality of pieces of attribute data.

4. The data exchange system (1) according to any one of claims 1 to 3, further comprising:
a loss information management unit (28) configured to refer to the base code associated with the output-side external attribute data in the conversion unit (20), and executes predetermined processing when the base code corresponding to the attribute data included in the standard data (120, 122) is not associated with the output-side external attribute data.

5. The data exchange system (1) according to any one of claims 1 to 4, further comprising:
an information supplement unit (26) configured to add supplementary information to the standard data (120, 122), the input-side external data including the supplementary information related to the input-side external data, wherein the conversion unit is configured to add the supplementary information added to the standard data (120, 122) to the output data.

6. A data exchange method for exchanging data in an input-Side external database into data usable in an output-side external database, the data exchange method comprising:
an item mapping step of, when input-side external data is stored in the input-side external database and includes input-side external attribute data corresponding to an input-side external attribute item indicating an attribute of the input-side external data, associating an attribute item indicating an attribute corresponding to the input-side external attribute item with the input-side external attribute item, and, when output-side external data is stored in the output-side external database and includes output-side external attribute data corresponding to an output-side external attribute item indicating an attribute of the output-side external data, associating the attribute item corresponding to the output-side external attribute item with the output-side external attribute item;
a code mapping step of associating the input-side external attribute data with a base code of attribute data included in the attribute item associated with the input-side external attribute item to which the input-side external attribute data belongs by a item mapping unit (14), and associating the output-side external attribute data with the base code of the attribute data included in the attribute item associated with the output-side external attribute item to which the output-side external attribute data belongs by the item mapping unit;
**characterized by** further comprising
a standard data conversion step of converting the input-side external data into standard data (120, 122) configured by
the attribute data associated with the base code associated with the input-side external attribute data; and
a conversion step of referring to the base code associated with the output-side external attribute data, and converting the input-side external data into output data for the output-side external database, using the attribute data corresponding to the base code and included in the standard data (120, 122).

7. A data exchange program for a data exchange system that exchanges data in an input-side external database into data usable in an output-side external database, the data exchange program causing a computer to realize:
an item mapping function of, when input-side external data is stored in the input-side external database and includes input-side external attribute data corresponding to an input-side external attribute item indicating an attribute of the input-side external data, associating an attribute item indicating an attribute corresponding to the input-side external attribute item with the input-side external attribute item, and, when output-side external data is stored in the output-side external database and includes output-side
external attribute data corresponding to an output-side external attribute item indicating an attribute of the output-side external data, associating the attribute item corresponding to the output-side external attribute item with the output-side external attribute item;
a code mapping function of associating the input-side external attribute data with a base code of attribute data included in the attribute item associated with the input-side external attribute item to which the input-side external attribute data belongs by a item mapping unit (14), and associating the output-side external attribute data with the base code of the attribute data included in the attribute item associated with the output-side external attribute item to which the output-side external attribute data belongs by the item mapping unit (14);
**characterized by** further comprising
a standard data conversion function of converting the input-side external data into standard data (120, 122) configured by the attribute data associated with the base code associated with the input-side external attribute data; and
a conversion function of referring to the base code associated with the output-side external attribute data, and converting the input-side external data into output data for the output-side external database, using the attribute data corresponding to the base code and included in the standard data (120, 122).

## Patentansprüche

1. Datenaustauschsystem (1), das umfasst:
eine Basisdatenbank (12), die dazu konfiguriert ist, Attributdaten zu speichern, die in einem Attributelement enthalten sind, das ein Attribut in Verbindung mit einem Basiscode der Attributdaten angibt;
eine Elementabbildungseinheit (14), die so konfiguriert ist, dass sie, wenn eingangsseitige externe Daten in einer eingangsseitigen externen Datenbank (3) gespeichert sind und eingangsseitige externe Attributdaten enthalten, die einem eingangsseitigen externen Attributelement entsprechen, das ein Attribut der eingangsseitigen externen Daten angibt, das Attributelement, das dem eingangsseitigen externen Attributelement entspricht, mit dem eingangsseitigen externen Attributelement verbindet, und, wenn ausgangsseitige externe Daten in einer ausgangsseitigen externen Datenbank (7) gespeichert sind und ausgangsseitige externe Attributdaten enthalten, die einem ausgangsseitigen externen Attributelement entsprechen, das ein Attribut der ausgangsseitigen externen Daten angibt, das Attributelement, das dem ausgangsseitigen externen Attributelement entspricht, mit dem ausgangsseitigen externen Attributelement verbindet;
eine Codeabbildungseinheit (16), die dazu konfiguriert ist, die eingangsseitigen externen Attributdaten mit dem Basiscode zu verbinden, der in dem Attributelement enthalten ist, das mit dem eingangsseitigen externen Attributelement verbunden ist, zu dem die eingangsseitigen externen Attributdaten durch die Elementabbildungseinheit (14) gehören, und die ausgangsseitigen externen Attributdaten mit dem Basiscode zu verbinden, der in dem Attributelement enthalten ist, das mit dem ausgangsseitigen externen Attributelement verbunden ist, zu dem die ausgangsseitigen externen Attributdaten durch die Elementabbildungseinheit (14) gehören;
**dadurch gekennzeichnet, dass** es weiter umfasst:
eine Standarddatenkonvertierungseinheit (18), die dazu konfiguriert ist, die eingangsseitigen externen Daten in Standarddaten (120, 122) zu konvertieren, die durch die Attributdaten konfiguriert sind, die mit dem Basiscode verbunden sind, der mit den eingangsseitigen externen Attributdaten verbunden ist; und
eine Konvertierungseinheit (20), die dazu konfiguriert ist, auf den Basiscode zu verweisen, der mit den ausgangsseitigen externen Attributdaten verbunden ist, und die eingangsseitigen externen Daten in Ausgangsdaten für die ausgangsseitige externe Datenbank zu konvertieren, unter Verwendung der Attributdaten, die dem Basiscode entsprechen und in den Standarddaten (120, 122) enthalten sind.

2. Datenaustauschsystem (1) nach Anspruch 1, wobei,
wenn das eingangsseitige externe Attributelement eine Vielzahl der Attributelemente enthält, die Elementabbildungseinheit (14) das eingangsseitige externe Attributelement mit jedem der Vielzahl von Attributelementen verbindet, und
wenn das ausgangsseitige externe Attributelement eine Vielzahl der Attributelemente enthält, die Elementabbildungseinheit (14) das ausgangsseitige externe Attributelement mit jedem der Vielzahl von Attributelementen verbindet.

3. Datenaustauschsystem (1) nach Anspruch 1 oder 2, wobei,
wenn die eingangsseitigen externen Attributdaten eine Vielzahl von Teilen der Attributdaten enthalten, die Codeabbildungseinheit die eingangsseitigen externen Attributdaten mit dem Basiscode jedes der Vielzahl von Teilen von Attributdaten verbindet, und
wenn die ausgangsseitigen externen Attributdaten eine Vielzahl von Teilen der Attributdaten enthalten, die Codeabbildungseinheit die ausgangsseitigen externen Attributdaten mit dem Basiscode jedes der Vielzahl von Teilen der Attributdaten verbindet.

4. Datenaustauschsystem (1) nach einem der Ansprüche 1 bis 3, das weiter umfasst:
eine Verlustinformations-Verwaltungseinheit (28), die dazu konfiguriert ist, auf den Basiscode zu verweisen, der mit den ausgangsseitigen externen Attributdaten in der Konvertierungseinheit (20) verbunden ist, und eine vorbestimmte Verarbeitung ausführt, wenn der Basiscode, der den in den Standarddaten (120, 122) enthaltenen Attributdaten entspricht, nicht mit den ausgangsseitigen externen Attributdaten verbunden ist.

5. Datenaustauschsystem (1) nach einem der Ansprüche 1 bis 4, das weiter umfasst:
eine Informationsergänzungseinheit (26), die dazu konfiguriert ist, den Standarddaten (120, 122) ergänzende Informationen hinzuzufügen, wobei die eingangsseitigen externen Daten die ergänzenden Informationen enthalten, die sich auf die eingangsseitigen externen Daten beziehen, wobei die Konvertierungseinheit dazu konfiguriert ist, die zu den Standarddaten (120, 122) hinzugefügten ergänzenden Informationen zu den Ausgangsdaten hinzuzufügen.

6. Datenaustauschverfahren zum Austauschen von Daten in einer eingangsseitigen externen Datenbank mit Daten, die in einer ausgangsseitigen externen Datenbank verwendbar sind, wobei das Datenaustauschverfahren umfasst:
einen Elementabbildungsschritt eines Verbindens, wenn eingangsseitige externe Daten in der eingangsseitigen externen Datenbank gespeichert sind und eingangsseitige externe Attributdaten enthalten, die einem eingangsseitigen externen Attributelement entsprechen, das ein Attribut der eingangsseitigen externen Daten angibt, eines Attributelements, das ein Attribut angibt, das dem eingangsseitigen externen Attributelement entspricht, mit dem eingangsseitigen externen Attributelement, und eines Verbindens, wenn ausgangsseitige externe Daten in der ausgangsseitigen externen Datenbank gespeichert sind und ausgangsseitige externe Attributdaten enthalten, die einem ausgangsseitigen externen Attributelement entsprechen, das ein Attribut der ausgangsseitigen externen Daten angibt, des Attributelements, das dem ausgangsseitigen externen Attributelement entspricht, mit dem ausgangsseitigen externen Attributelement;
einen Codeabbildungsschritt eines Verbindens der eingangsseitigen externen Attributdaten mit einem Basiscode von Attributdaten, der in dem Attributelement enthalten ist, das mit dem eingangsseitigen externen Attributelement verbunden ist, zu dem die eingangsseitigen externen Attributdaten durch eine Elementabbildungseinheit (14) gehören, und eines Verbindens der ausgangsseitigen externen Attributdaten mit dem Basiscode der Attributdaten, der in dem Attributelement enthalten ist, das mit dem ausgangsseitigen externen Attributelement verbunden ist, zu dem die ausgangsseitigen externen Attributdaten durch die Elementabbildungseinheit gehören;
**dadurch gekennzeichnet, dass** es weiter umfasst:
einen Standarddatenkonvertierungsschritt eines Konvertierens der eingangsseitigen externen Daten in Standarddaten (120, 122), die durch die Attributdaten konfiguriert sind, die mit dem Basiscode verbunden sind, der mit den eingangsseitigen externen Attributdaten verbunden ist; und
einen Konvertierungsschritt eines Verweisens auf den Basiscode, der mit den ausgangsseitigen externen Attributdaten verbunden ist, und eines Konvertierens der eingangsseitigen externen Daten in Ausgangsdaten für die ausgangsseitige externe Datenbank unter Verwendung der Attributdaten, die dem Basiscode entsprechen und in den Standarddaten (120, 122) enthalten sind.

7. Datenaustauschprogramm für ein Datenaustauschsystem, das Daten in einer eingangsseitigen externen Datenbank mit Daten austauscht, die in einer ausgangsseitigen externen Datenbank verwendbar sind, wobei das Datenaustauschprogramm einen Computer dazu veranlasst, Folgendes auszuführen:
eine Elementabbildungsfunktion eines Verbindens, wenn eingangsseitige externe Daten in der eingangsseitigen externen Datenbank gespeichert sind und eingangsseitige externe Attributdaten enthalten, die einem eingangsseitigen externen Attributelement entsprechen, das ein Attribut der eingangsseitigen externen Daten angibt, eines Attributelements, das ein Attribut angibt, das dem eingangsseitigen externen Attributelement entspricht, mit dem eingangsseitigen externen Attributelement, und eines Verbindens, wenn ausgangsseitige externe Daten in der ausgangsseitigen externen Datenbank gespeichert sind und ausgangsseitige externe Attributdaten enthalten, die einem ausgangsseitigen externen Attributelement entsprechen, das ein Attribut der ausgangsseitigen externen Daten angibt, des Attributelements, das dem ausgangsseitigen externen Attributelement entspricht, mit dem ausgangsseitigen externen Attributelement;
eine Codeabbildungsfunktion eines Verbindens der eingangsseitigen externen Attributdaten mit einem Basiscode von Attributdaten, der in dem Attributelement enthalten ist, das mit dem eingangsseitigen externen Attributelement verbunden ist, zu dem die eingangsseitigen externen Attributdaten durch eine Elementabbildungseinheit (14) gehören, und eines Verbindens der ausgangsseitigen externen Attributdaten mit dem Basiscode der Attributdaten, der in dem Attributelement enthalten ist, das mit dem ausgangsseitigen externen Attributelement verbunden ist, zu dem die ausgangsseitigen externen Attributdaten durch die Elementabbildungseinheit (14) gehören;
**dadurch gekennzeichnet, dass** es weiter umfasst:
eine Standarddatenkonvertierungsfunktion eines Konvertierens der eingangsseitigen externen Daten in Standarddaten (120, 122), die durch die Attributdaten konfiguriert sind, die mit dem Basiscode verbunden sind, der mit den eingangsseitigen externen Attributdaten verbunden ist; und
eine Konvertierungsfunktion eines Verweisens auf den Basiscode, der mit den ausgangsseitigen externen Attributdaten verbunden ist, und eines Konvertierens der eingangsseitigen externen Daten in Ausgangsdaten für die ausgangsseitige externe Datenbank unter Verwendung der Attributdaten, die dem Basiscode entsprechen und in den Standarddaten (120, 122) enthalten sind.

## Revendications

1. Système d'échange de données (1) comprenant :
une base de données de base (12) configurée pour stocker des données d'attribut incluses dans un élément d'attribut indiquant un attribut en association avec un code de base des données d'attribut ;
une unité de mappage d'élément (14) configurée pour, lorsque des données externes côté entrée sont stockées dans une base de données externe côté entrée (3) et incluent des données d'attribut externes côté entrée correspondant à un élément d'attribut externe côté entrée indiquant un attribut des données externes côté entrée, associer l'élément d'attribut correspondant à l'élément d'attribut externe côté entrée à l'élément d'attribut externe côté entrée, et pour, lorsque des données externes côté sortie sont stockées dans une base de données externe côté sortie (7) et incluent des données d'attribut externes côté sortie correspondant à un élément d'attribut externe côté sortie indiquant un attribut des données externes côté sortie, associer l'élément d'attribut correspondant à l'élément d'attribut externe côté sortie avec l'élément d'attribut externe côté sortie ;
une unité de mappage de code (16) configurée pour associer les données d'attribut externes côté entrée au code de base inclus dans l'élément d'attribut associé à l'élément d'attribut externe côté entrée auquel appartiennent les données d'attribut externes côté entrée par l'unité de mappage d'élément (14), et pour associer les données d'attribut externes côté sortie au code de base inclus dans l'élément d'attribut associé à l'élément d'attribut externe côté sortie auquel appartiennent les données d'attribut externes côté sortie par l'unité de mappage d'élément (14) ;
**caractérisé en ce qu'**il comprend en outre
une unité de conversion de données standard (18) configurée pour convertir les données externes côté entrée en données standard (120, 122) configurées par les données d'attribut associées au code de base associé aux données d'attribut externes côté entrée ; et
une unité de conversion (20) configurée pour se référer au code de base associé aux données d'attribut externes côté sortie, et pour convertir les données externes côté entrée en données de sortie pour la base de données externe côté sortie, en utilisant les données d'attribut correspondant au code de base et incluses dans les données standard (120, 122).

2. Système d'échange de données (1) selon la revendication 1, dans lequel,
lorsque l'élément d'attribut externe côté entrée inclut une pluralité des éléments d'attribut, l'unité de mappage d'élément (14) associe l'élément d'attribut externe côté entrée à chacun de la pluralité d'éléments d'attribut, et
lorsque l'élément d'attribut externe côté sortie inclut une pluralité des éléments d'attribut, l'unité de mappage d'élément (14) associe l'élément d'attribut externe côté sortie à chacun de la pluralité d'éléments d'attribut.

3. Système d'échange de données (1) selon la revendication 1 ou 2, dans lequel,
lorsque les données d'attribut externes côté entrée incluent une pluralité de morceaux des données d'attribut, l'unité de mappage de code associe les données d'attribut externes côté entrée au code de base de chacun de la pluralité de morceaux de données d'attribut, et
lorsque les données d'attribut externes côté sortie incluent une pluralité de morceaux des données d'attribut, l'unité de mappage de code associe les données d'attribut externes côté sortie au code de base de chacun de la pluralité de morceaux de données d'attribut.

4. Système d'échange de données (1) selon l'une quelconque des revendications 1 à 3, comprenant en outre :
une unité de gestion d'informations de perte (28) configurée pour se référer au code de base associé aux données d'attribut externes côté sortie dans l'unité de conversion (20), et exécute un traitement prédéterminé lorsque le code de base correspondant aux données d'attribut incluses dans les données standard (120, 122) n'est pas associé aux données d'attribut externes côté sortie.

5. Système d'échange de données (1) selon l'une quelconque des revendications 1 à 4, comprenant en outre :
une unité de supplément d'informations (26) configurée pour ajouter des informations supplémentaires aux données standard (120, 122), les données externes côté entrée incluant les informations supplémentaires liées aux données externes côté entrée, dans lequel l'unité de conversion est configurée pour ajouter aux données de sortie les informations supplémentaires ajoutées aux données standard (120, 122).

6. Procédé d'échange de données pour échanger des données dans une base de données externe côté entrée en données utilisables dans une base de données externe côté sortie, le procédé d'échange de données comprenant :
une étape de mappage d'élément consistant à, lorsque des données externes côté entrée sont stockées dans une base de données externe côté entrée et incluent des données d'attribut externes côté entrée correspondant à un élément d'attribut externe côté entrée indiquant un attribut des données externes côté entrée, associer un élément d'attribut indiquant un attribut correspondant à l'élément d'attribut externe côté entrée à l'élément d'attribut externe côté entrée, et, lorsque des données externes côté sortie sont stockées dans la base de données externe côté sortie et incluent des données d'attribut externes côté sortie correspondant à un élément d'attribut externe côté sortie indiquant un attribut des données externes côté sortie, associer l'élément d'attribut correspondant à l'élément d'attribut externe côté sortie à l'élément d'attribut externe côté sortie ;
une étape de mappage de code consistant à associer les données d'attribut externes côté entrée au code de base de données d'attribut incluses dans l'élément d'attribut associé à l'élément d'attribut externe côté entrée auquel appartiennent les données d'attribut externes côté entrée par une unité de mappage d'élément (14), et associer les données d'attribut externes côté sortie au code de base des données d'attribut incluses dans l'élément d'attribut associé à l'élément d'attribut externe côté sortie auquel appartiennent les données d'attribut externes côté sortie par l'unité de mappage d'élément ;
**caractérisé en ce qu'**il comprend en outre
une étape de conversion de données standard consistant à convertir les données externes côté entrée en données standard (120, 122) configurées par les données d'attribut associées au code de base associé aux données d'attribut externes côté entrée ; et
une étape de conversion consistant à se référer au code de base associé aux données d'attribut externes côté sortie, et à convertir les données externes côté entrée en données de sortie pour la base de données externe côté sortie, en utilisant les données d'attribut correspondant au code de base et incluses dans les données standard (120, 122).

7. Programme d'échange de données pour un système d'échange de données qui échange des données dans une base de données externe côté entrée en données utilisables dans une base de données externe côté sortie, le programme d'échange de données amenant un ordinateur à réaliser :
une fonction de mappage d'élément consistant à, lorsque des données externes côté entrée sont stockées dans une base de données externe côté entrée et incluent des données d'attribut externes côté entrée correspondant à un élément d'attribut externe côté entrée indiquant un attribut des données externes côté entrée, associer un élément d'attribut indiquant un attribut correspondant à l'élément d'attribut externe côté entrée à l'élément d'attribut externe côté entrée, et, lorsque des données externes côté sortie sont stockées dans la base de données externe côté sortie et incluent des données d'attribut externes côté sortie correspondant à un élément d'attribut externe côté sortie indiquant un attribut des données externes côté sortie, associer l'élément d'attribut correspondant à l'élément d'attribut externe côté sortie à l'élément d'attribut externe côté sortie ;
une fonction de mappage de code consistant à associer les données d'attribut externes côté entrée au code de base de données d'attribut incluses dans l'élément d'attribut associé à l'élément d'attribut externe côté entrée auquel appartiennent les données d'attribut externes côté entrée par une unité de mappage d'élément (14), et associer les données d'attribut externes côté sortie au code de base des données d'attribut incluses dans l'élément d'attribut associé à l'élément d'attribut externe côté sortie auquel appartiennent les données d'attribut externes côté sortie par l'unité de mappage d'élément (14) ;
**caractérisé en ce qu'**il comprend en outre
une fonction de conversion de données standard consistant à convertir les données externes côté entrée en données standard (120, 122) configurées par les données d'attribut associées au code de base associé aux données d'attribut externes côté entrée ; et
une fonction de conversion consistant à se référer au code de base associé aux données d'attribut externes côté sortie, et à convertir les données externes côté entrée en données de sortie pour la base de données externe côté sortie, en utilisant les données d'attribut correspondant au code de base et incluses dans les données standard (120, 122).
